(19) Europäisches Patentamt / European Patent Office / Office européen des brevets

(11) **EP 4 443 880 A1**

(12) **EUROPEAN PATENT APPLICATION**

(43) Date of publication:
**09.10.2024 Bulletin 2024/41**

(21) Application number: **24161149.0**

(22) Date of filing: **04.03.2024**

(51) International Patent Classification (IPC):
**H04N 19/25** (2014.01)   **G06T 9/00** (2006.01)
**G06T 17/00** (2006.01)   **H04N 19/597** (2014.01)
**H04N 21/234** (2011.01)   **H04N 21/2368** (2011.01)

(52) Cooperative Patent Classification (CPC):
**H04N 19/25; G06T 9/001; G06T 17/00;
H04N 19/597; H04N 21/23412; H04N 21/2368**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023   FI 20235402**

(71) Applicant: **Nokia Technologies Oy
02610 Espoo (FI)**

(72) Inventors:
• **ILOLA, Lauri Aleksi
Tampere (FI)**

• **KONDRAD, Lukasz
Munich (DE)**
• **MATE, Sujeet Shyamsundar
Tampere (FI)**
• **SCHWARZ, Sebastian
Unterhaching (DE)**
• **RONDAO ALFACE, Patrice
Braine-L Alleud (BE)**

(74) Representative: **Nokia EPO representatives
Nokia Technologies Oy
Karakaari 7
02610 Espoo (FI)**

(54) **A METHOD, AN APPARATUS AND A COMPUTER PROGRAM PRODUCT FOR ENCODING AND DECODING OF VOLUMETRIC MEDIA CONTENT**

(57)    The embodiments relate to a method for encoding, comprising a receiving audio-visual three-dimensional scene comprising geometry information for an audio component and geometry information for a visual component; determining at least one base geometry component that is common for the audio component and visual component; encoding the determined at least one base geometry component into a bitstream being either a compressed audio bitstream or a compressed video bitstream; and encoding an indication of an absence of a base geometry component into a bitstream not comprising said at least one base geometry component. The embodiments also relate to a method for decoding, and technical equipment for implementing the methods.

Fig. 21

EP 4 443 880 A1

**Description**

<u>Technical Field</u>

The present solution generally relates to encoding and decoding of volumetric media content.

<u>Background</u>

Volumetric media content may comprise volumetric video data and volumetric audio data.
The volumetric video data represents a three-dimensional (3D) scene or object, and can be used as input for AR (Augmented Reality), VR (Virtual Reality), and MR (Mixed Reality) applications. Such data describes geometry (Shape, size, position in 3D space) and respective attributes (e.g., color, opacity, reflectance, ...), and any possible temporal transformations of the geometry and attributes at given time instances (like frames in twodimensional (2D) video).
The volumetric audio data represents immersive audio that is rendered to the volumetric scene being represented by volumetric video data. The volumetric audio compression integrates scene geometry in the compressed bitstream to allow synthesizing the spatial audio from any position in the scene. The bitstream for 6DoF (Six Degrees of Freedom) audio rendering can comprise acoustic effects for the volumetric scene.

<u>Summary</u>

The scope of protection sought for various embodiments of the invention is set out by the independent claims. The embodiments and features, if any, described in this specification that do not fall under the scope of the independent claims are to be interpreted as examples useful for understanding various embodiments of the invention.
Various aspects include a method, an apparatus and a computer readable medium comprising a computer program stored therein, which are characterized by what is stated in the independent claims. Various embodiments are disclosed in the dependent claims.
According to a first aspect, there is provided an apparatus comprising means for receiving audio-visual three-dimensional scene comprising geometry information for an audio component and geometry information for a visual component; means for determining at least one base geometry component that is common for the audio component and visual component; means for encoding the determined at least one base geometry component into a bitstream being either a compressed audio bitstream or a compressed video bitstream; and means for encoding an indication of an absence of a base geometry component into a bitstream not comprising said at least one base geometry component.
According to a second aspect, there is provided a method, comprising: receiving audio-visual three-dimensional scene comprising geometry information for an audio component and geometry information for a visual component; determining at least one base geometry component that is common for the audio component and visual component; encoding the determined at least one base geometry component into a bitstream being either a compressed audio bitstream or a compressed video bitstream; and encoding an indication of an absence of a base geometry component into a bitstream not comprising said at least one base geometry component.
According to a third aspect, there is provided an apparatus comprising at least one processor, memory including computer program code, the memory and the computer program code configured to, with the at least one processor, cause the apparatus to perform at least the following: receive audio-visual three-dimensional scene comprising geometry information for an audio component and geometry information for a visual component; determine at least one base geometry component that is common for the audio component and visual component; encode the determined at least one base geometry component into a bitstream being either a compressed audio bitstream or a compressed video bitstream; and encode an indication of an absence of a base geometry component into a bitstream not comprising said at least one base geometry component.
According to a fourth aspect, there is provided computer program product comprising computer program code configured to, when executed on at least one processor, cause an apparatus or a system to: receive audio-visual three-dimensional scene comprising geometry information for an audio component and geometry information for a visual component; determine at least one base geometry component that is common for the audio component and visual component; encode the determined at least one base geometry component into a bitstream being either a compressed audio bitstream or a compressed video bitstream; and encode an indication of an absence of a base geometry component into a bitstream not comprising said at least one base geometry component.
According to a fifth aspect, there is provided an apparatus comprising means for receiving one or more bitstreams comprising compressed audio bitstreams and compressed video bitstreams; means for detecting an indicator either from compressed audio bitstreams or from compressed video bitstreams, the indicator indicating an absence of a base geometry component in an audio bitstream or in a video bitstream; means for decoding a base geometry component from other of the compressed bitstreams not having the indicator; and means for creating an audio-visual three-dimensional scene according to the base geometry component.

According to a sixth aspect, there is provided a method, comprising receiving one or more bitstreams comprising compressed audio bitstreams and compressed video bitstreams; detecting an indicator either from compressed audio bitstreams or from compressed video bitstreams, the indicator indicating an absence of a base geometry component in an audio bitstream or in a video bitstream; decoding a base geometry component from other of the compressed bitstreams not having the indicator; and creating an audio-visual three-dimensional scene according to the base geometry component.

According to a seventh aspect, there is provided an apparatus comprising at least one processor, memory including computer program code, the memory and the computer program code configured to, with the at least one processor, cause the apparatus to perform at least the following: receive one or more bitstreams comprising compressed audio bitstreams and compressed video bitstreams; detect an indicator either from compressed audio bitstreams or from compressed video bitstreams, the indicator indicating an absence of a base geometry component in an audio bitstream or in a video bitstream; decode a base geometry component from other of the compressed bitstreams not having the indicator; and create an audio-visual three-dimensional scene according to the base geometry component.

According to an eighth aspect, there is provided computer program product comprising computer program code configured to, when executed on at least one processor, cause an apparatus or a system to receive one or more bitstreams comprising compressed audio bitstreams and compressed video bitstreams; detect an indicator either from compressed audio bitstreams or from compressed video bitstreams, the indicator indicating an absence of a base geometry component in an audio bitstream or in a video bitstream; decode a base geometry component from other of the compressed bitstreams not having the indicator; and create an audio-visual three-dimensional scene according to the base geometry component.

According to an embodiment for encoding, the visual component comprises one or more compressed video bitstreams and the audio component comprise one or more compressed audio bitstreams.

According to an embodiment for encoding, the audio-visual three-dimensional scene information comprises raw audio-visual three-dimensional scene information provided by audio-visual scene authoring entity.

According to an embodiment for encoding, in addition to said at least one base geometry component, any combination of the following is determined:

    zero or more geometry displacement components;
    zero or more visual attribute components;
    zero or more audio attribute components;
    zero or more general audio properties for the scene.

According to an embodiment for encoding, one or more audio material identifier values are determined and the one or more audio material identifier values are encoded as a new attribute video component in the compressed video bitstream, wherein each audio material identifier is mapped to an audio material description in the compressed audio bitstream.

According to an embodiment for encoding, the base geometry component comprises a base mesh being a low fidelity mesh approximation of an original mesh data of audio-visual three-dimensional scene information.

According to an embodiment for encoding, the compressed audio bitstream is coded according to an MPEG-I Immersive Audio (M-IIA) coding and the compressed video bitstream is coded according to a Video-based Dynamic Mesh Coding (V-DMC).

According to an embodiment for decoding, the base geometry is decoded from the compressed video bitstream, wherein the apparatus further comprises means for decoding audio material identifier from the compressed video bitstream; means for reconstructing meshes component according to base geometry component and the audio material identifier; and means for reconstructing the audio scene according to the reconstructed meshes and other compressed audio bitstreams.

According to an embodiment for decoding, the base geometry component is decoded from the compressed audio bitstream, wherein the apparatus further comprises means for reconstructing the audio scene according to the base geometry component and other compressed audio bitstreams.

According to an embodiment for decoding, the compressed audio bitstream is coded according to an MPEG-I Immersive Audio (M-IIA) coding and the compressed video bitstream is coded according to a Video-based Dynamic Mesh Coding (V-DMC).

According to an embodiment for decoding, creating the audio-visual three-dimensional scene comprises reconstructing a geometry and rendering the scene for a user.

According to an embodiment, the computer program product is embodied on a non-transitory computer readable medium.

Description of the Drawings

In the following, various embodiments will be described in more detail with reference to the appended drawings, in which

Fig. 1a  shows an example of a volumetric media conversion;
Fig. 1b  shows an example of a volumetric media reconstruction;
Fig. 2   shows an example of block to patch mapping;
Fig. 3a  shows an example of an atlas coordinate system;
Fig. 3b  shows an example of a local 3D patch coordinate system;
Fig. 3c  shows an example of a final target 3D coordinate system;
Fig. 4   shows an example of a subdivision step of a triangle into four triangles;
Fig. 5   shows an example of multi-resolution analysis of as mesh;
Fig. 6   shows an example of an encoding process comprising pre-processing;
Fig. 7   shows example of pre-processing steps at an encoder;
Fig. 8   shows an example of intra frame encoder;
Fig. 9   shows an example of inter frame encoder;
Fig. 10  shows an example of a decoding process comprising post-processing;
Fig. 11  shows an example of decoding process in intra mode;
Fig. 12  shows an example of decoding process in inter mode;
Fig. 13  shows an example of an architecture of MPEG-I Immersive Audio;
Fig. 14  shows an example of MPEG-I Immersive audio rendered components;
Fig. 15  shows an example of syntax for scene payload description;
Fig. 16  shows an example of a table for payloadScene;
Fig. 17  shows an example of syntax for materials;
Fig. 18  shows an example of syntax for meshes;
Fig. 19  shows an example of syntax for meshFaces;
Fig. 20  shows an example of syntax for payloadEarlyReflections;
Fig. 21  shows an example of high-level encoder operations;
Fig. 22  shows an example of high-level decoder operations;
Fig. 23  shows another example of high-level decoder operations;
Fig. 24  shows an example of encoder operations;
Fig. 25  shows another example of encoder operations;
Fig. 26  shows an example of audio material identifier map;
Fig. 27  shows an example of syntax for meshes;
Fig. 28  is a flowchart illustrating a method for encoding according to an embodiment;
Fig. 29  is a flowchart illustrating a method for decoding according to another embodiment; and
Fig. 30  shown an example of an apparatus.

Description of Example Embodiments

The present embodiments relate to encoding, signalling, and rendering a volumetric video. In particular, the present embodiments relate to improved patch data signalling for V3C standards.

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment in included in at least one embodiment of the disclosure.

The present embodiments relate to improvements that can be made to content, which comprises ISO/IEC 23090-29 Video-based Dynamic Mesh Coding (V-DMC) compressed visual content as well as ISO/IEC 23090-4 MPEG-I Immersive Audio (M-IIA) compressed audio content. Thus, the present embodiments can be relevant to the ISO/IEC 23090-14 MPEG-I Scene Description (SD) work related to enable support for M-IIA in SD.

Volumetric video data represents a three-dimensional scene or object and can be used as input for AR, VR and MR applications. Such data describes geometry (shape, size, position in 3D space) and respective attributes (e.g., color, opacity, reflectance, ...), plus any possible temporal transformations of the geometry and attributes at given time instances (like frames in 2D video). Volumetric video is either generated from 3D models, i.e., CGI, or captured from real-world scenes using a variety of capture solutions, e.g., multi-camera, laser scan, combination of video and dedicated depth sensors, and more. Also, a combination of CGI and real-world data is possible. Representation formats for such volumetric data are triangle meshes, point clouds, or voxels. Temporal information about the scene can be included in the form of individual capture instances, i.e., "frames" in 2D video, or other means, e.g., position of an object as a function of time.

Because volumetric video describes a 3D scene (or object), such data can be viewed from any viewpoint. Therefore, volumetric video is an important format for any AR, VR or MR applications, especially for providing 6DOF viewing capabilities.

Increasing computational resources and advances in 3D data acquisition devices have enabled reconstruction of highly detailed volumetric video representations or natural scenes. Infrared, lasers, time-of-flight, and structured light are all examples of devices that can be used to construct 3D video data. Representation of the 3D data depends on how the 3D data is used. Dense Voxel arrays have been used to represent volumetric medical data. In 3D graphics, polygonal meshes are extensively used. Point clouds on the other hand are well suited for applications such as capturing real world 3D scenes where the topology is not necessarily a 2D manifold. Another way to represent 3D data is coding this 3D data as set of texture and depth map as is the case in the multi-view plus depth. Closely related to the techniques used in multi-view plus depth is the use of elevation maps, and multi-level surface maps.

In the following, a short reference of ISO/IEC 23090-5 Visual Volumetric Video-based Coding (V3C) and Video-based Point Cloud Compression (V-PCC) 2nd Edition is given. Visual volumetric video comprising a sequence of visual volumetric frames, if uncompressed, may be represented by a large amount of data, which can be costly in terms of storage and transmission. This has led to the need for a high coding efficiency standard for the compression of visual volumetric data.

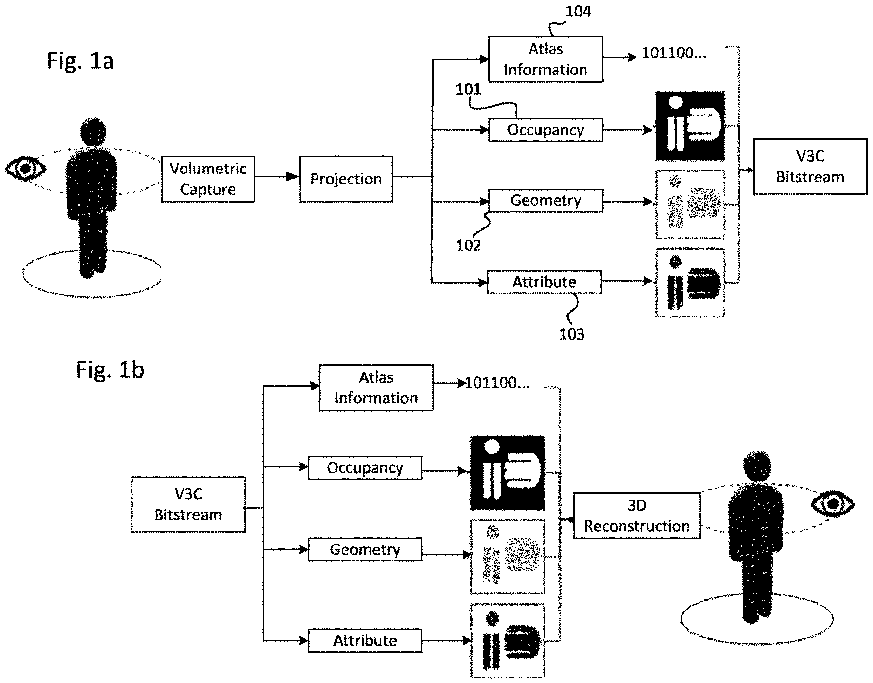

V3C enables the encoding and decoding processes of a variety of volumetric media by using video and image coding technologies. This is achieved through first a conversion of such media from their corresponding 3D representation to multiple 2D representations, also referred to as V3C video components, before coding such information. Such representations may include occupancy, geometry, and attribute components. The occupancy component can inform a V3C decoding and/or rendering system of which samples in the 2D components are associated with data in the final 3D representation. The geometry component contains information about the precise location of 3D data in space, while attribute components can provide additional properties, e.g., texture or material information, of such 3D data. An example is shown in Figures 1a and 1b, where Figure 1a presents volumetric media conversion at an encoder, and where Figure 1b presents volumetric media reconstruction at a decoder side. The 3D media is converted to a series of 2D representations: occupancy 101, geometry 102, and attributes 103. Additional information may also be included in the bitstream to enable inverse reconstruction.

Additional information that allows associating all these V3C video components and enables the inverse reconstruction from a 2D representation back to a 3D representation is also included in a special component, referred to in this document as the atlas 104. An atlas 104 may consist of multiple elements, called "patches". The atlas may be generated in an atlas generator. Each patch identifies a region in all available 2D components and contains information necessary to perform the appropriate inverse projection of this region back to the 3D space. In other words, a plurality of patches represents a plurality of views to a content of the volumetric video frame. The shape of such regions is determined through a 2D bounding volume associated with each patch as well as their coding order. The shape of these regions is also further refined after the consideration of the occupancy information.

The atlas generator may comprise or cooperate with a patch packer, where atlases may be partitioned into patch packing blocks of equal size. The 2D bounding volumes of patches and their coding order determine the mapping between the blocks of the atlas image and the patch indices. In patch generation, 3D samples of a frame are converted into 2D samples on a given projection plane using a strategy which provides the best compression. According to an example, patch generation aims at decomposing the frame into a minimum number of patches with smooth boundaries, while also minimizing the reconstruction error.

At the initial stage of the patch generation, a normal per each point of a point cloud frame is estimated. The tangent plane and its corresponding normal are defined per each point, based on the point's nearest neighbors $m$ within a predefined search distance. A $k$-dimensional tree may be used to separate the data and find neighbors in a vicinity of a point $p_i$ and a barycenter $c = \bar{p}$ of that set of points is used to define the normal. The barycenter c may be computed as follows:

$$c = \bar{p} = \frac{1}{m} \sum_{i=1}^{m} p_i$$

The normal is estimated from eigen decomposition for the defined point cloud as:

$$\sum_{i=1}^{m} (p_i - \bar{p})(p_i - \bar{p})^T$$

Based on this information, each point is associated with a corresponding plane of a point cloud bounding box. Each plane is defined by a corresponding normal $\vec{n}_{pidx}$ with values:

- (1.0, 0.0, 0.0),
- (0.0, 1.0, 0.0),
- (0.0, 0.0, 1.0),
- (-1.0, 0.0, 0.0),
- (0.0, -1.0, 0.0),
- (0.0, 0.0, -1.0)

More precisely, each point may be associated with the plane that has the closest normal (i.e., maximizes the dot product of the point normal $\vec{n}_{pi}$ and the plane normal $\vec{n}_{pidx}$).

$$\max_{p_{idx}} \left\{ \vec{n}_{p_i} \cdot \vec{n}_{p_{idx}} \right\}$$

The sign of the normal is defined depending on the point's position in relationship to the "center".

The initial clustering may then be refined by iteratively updating the cluster index associated with each point based on its normal and the cluster indices of its nearest neighbors. The final step of the patch generation may comprise extracting patches by applying a connected component extraction procedure.

Patch info determined at patch generation for the input frame is delivered to patch packing, to geometry image generation, to attribute image generation, to smoothing (3D) and to patch sequence compression.

The packing process may iteratively try to insert patches into a WxH grid. W and H may be user defined parameters, which correspond to the resolution of the geometry/texture images that will be encoded. The patch location may be determined through an exhaustive search that may be performed in raster scan order. Initially, patches are placed on a 2D grid in a manner that would guarantee non-overlapping insertion. Samples belonging to a patch (rounded to a value that is a multiple of T) are considered as occupied blocks. In addition, a safeguard between adjacent patches is forced to distance of at least one block being multiple of T. According to the state of the art, patches are processed in an orderly manner, based on the patch index list. Each patch from the list is iteratively placed on the grid. The grid resolution depends on the original point cloud size and its width (W), and height (H) are transmitted to the decoder. In the case that there is no empty space available for the next patch the height value of the grid is initially doubled, and the insertion of this patch is evaluated again. If insertion of all patches is successful, then the height is trimmed to the minimum needed value. However, this value is not allowed to be set lower than the originally specified value in the encoder. The final values for W and H correspond to the frame resolution that is used to encode the texture and geometry video signals using the appropriate video codec.

The geometry image generation and the attribute image generation are configured to generate geometry images and attribute images. The image generation process may exploit the 3D to 2D mapping computed during the packing process to store the geometry and attribute of the point cloud as images. In order to better handle the case of multiple points being projected to the same pixel, each patch may be projected onto two images, referred to as layers.

The geometry images and the attribute images may be provided to image padding.

The padded geometry images and padded attribute images may be provided for video compression. The video compression also generates reconstructed geometry images to be provided for smoothing, wherein a smoothed geometry is determined based on the reconstructed geometry images and patch info from the patch generation. The smoothed geometry may be provided to attribute image generation to adapt the texture images.

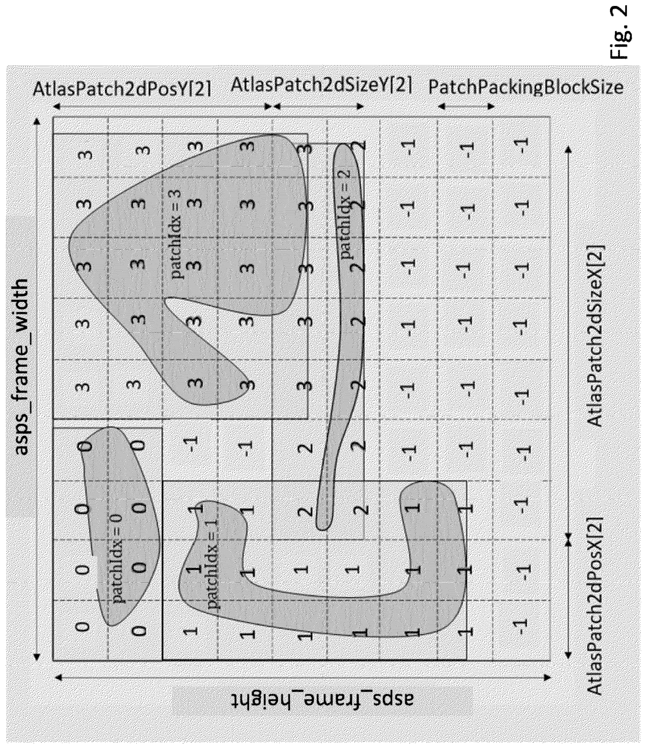

Figure 2 shows an example of block to patch mapping with 4 projected patches onto an atlas when asps_patch_precedence_order_flag is equal to 0. Projected points are represented with dark grey. The area that does not contain any projected points is represented with light grey. Patch packing blocks are represented with dashed lines. The number inside each patch packing block represents the patch index of the patch to which it is mapped.

Axes orientations are specified for internal operations. For instance, the origin of the atlas coordinates is located on the top-left corner of the atlas frame. For the reconstruction step, an intermediate axes definition for a local 3D patch coordinate system is used. The 3D local patch coordinate system is then converted to the final target 3D coordinate system using appropriate transformation steps.

As defined in the technology, the patch may be associated with auxiliary information being encoded/decoded for each patch as metadata. The auxiliary information may comprise index of the projection plane, 2D bounding box, 3D location of the patch represented in terms of depth 60, tangential shift s0 and bitangential shift rD.

The following metadata may be encoded/decoded for every patch:

- Index of the projection plane

  ○ Index 0 for the planes (1.0, 0.0, 0.0) and (-1.0, 0.0, 0.0)
  ○ Index 1 for the planes (0.0, 1.0, 0.0) and (0.0, -1.0, 0.0)
  ○ Index 2 for the planes (0.0, 0.0, 1.0) and (0.0, 0.0, -1.0).

- 2D bounding box (u0, v0, u1, v1)
- 3D location (x0, y0, z0) of the patch represented in terms of depth $\delta 0$, tangential shift s0 and bi-tangential shift r0. According to the chosen projection planes, $(\delta 0, s0, r0)$ are computed as follows:

  ○ Index 0, $\delta 0 = x0$, s0=z0 and r0 = y0
  ○ Index 1, $\delta 0 = y0$, s0=z0 and r0 = x0
  ○ Index 2, $\delta 0 = z0$, s0=x0 and r0 = y0

Also, mapping information providing for each TxT block its associated patch index may be encoded as follows:

- For each TxT block, let L be the ordered list of the indexes of the patches such that their 2D bounding box contains that block. The order in the list is the same as the order used to encode the 2D bounding boxes. L is called the list of candidate patches.
- The empty space between patches is considered as a patch and is assigned the special index 0, which is added to the candidate patches list of all the blocks.
- Let I be index of the patch to which belongs the current TxT block and let J be the position of I in L. Instead of explicitly encoding the index I, its position J is arithmetically encoded instead, which leads to better compression efficiency.

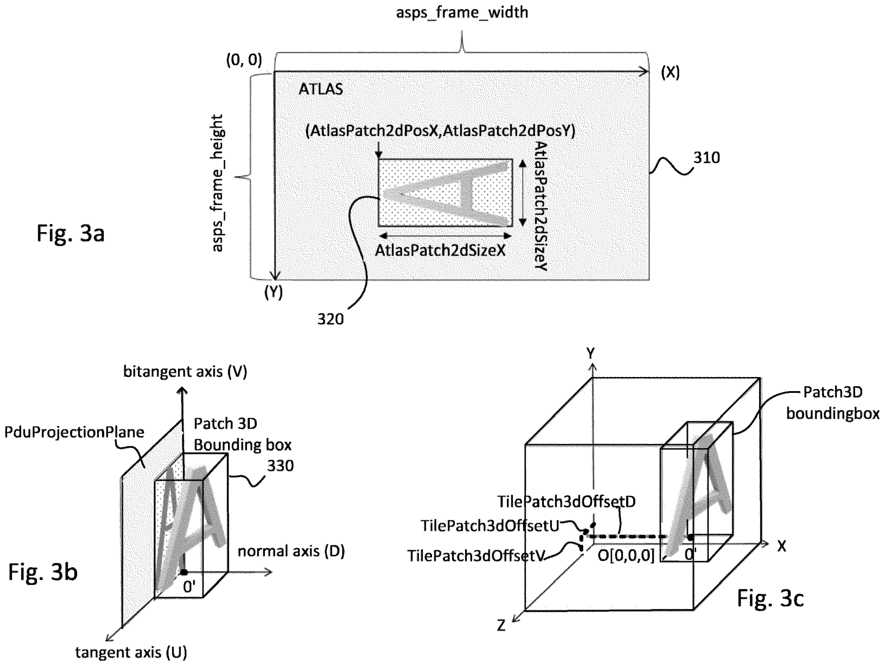

Figure 3a shows an example of a single patch 320 packed onto an atlas image 310. This patch 320 is then converted to a local 3D patch coordinate system (U, V, D) defined by the projection plane with origin 0', tangent (U), bi-tangent (V), and normal (D) axes. For an orthographic projection, the projection plane is equal to the sides of an axis-aligned 3D bounding volume 330, as shown in Figure 3b. The location of the bounding volume 330 in the 3D model coordinate system, defined by a left-handed system with axes (X, Y, Z), can be obtained by adding offsets TilePatch3dOffsetU, TilePatch3DOffsetV, and TilePatch3DOffsetD, as illustrated in Figure 3c.

Coded V3C video components are referred to in this disclosure as video bitstreams, while a coded atlas is referred to as the atlas bitstream. Video bitstreams and atlas bitstreams may be further split into smaller units, referred to here as video and atlas sub-bitstreams, respectively, and may be interleaved together, after the addition of appropriate delimiters, to construct a V3C bitstream.

V3C patch information is contained in atlas bitstream, atlas_sub_bitstream(), which contains a sequence of NAL units. NAL unit is specified to format data and provide header information in a manner appropriate for conveyance on a variety of communication channels or storage media. All data are contained in NAL units, each of which contains an integer number of bytes. A NAL unit specifies a generic format for use in both packet-oriented and bitstream systems. The format of NAL units for both packet-oriented transport and sample streams is identical except that in the sample stream format specified in Annex D of ISO/IEC 23090-5 each NAL unit can be preceded by an additional element that specifies the size of the NAL unit.

NAL units in atlas bitstream can be divided to atlas coding layer (ACL) and non-atlas coding layer (non-ACL) units. The former dedicated to carry patch data while the later to carry data necessary to properly parse the ACL units or any additional auxiliary data.

In the nal_unit_header() syntax nal_unit_type specifies the type of the RBSP (Raw Byte Sequence Payload) data structure contained in the NAL unit as specified in Table 4 of ISO/IEC 23090-5. nal_layer_id specifies the identifier of the layer to which an ACL NAL unit belongs or the identifier of a layer to which a non-ACL NAL unit applies. The value of nal_layer_id shall be in the range of 0 to 62, inclusive. The value of 63 may be specified in the future by ISO/IEC. Decoders conforming to a profile specified in Annex A of ISO/IEC 23090-5 shall ignore (i.e., remove from the bitstream and discard) all NAL units with values of nal_layer_id not equal to 0.

V3C has been designed to be extensible to ensure that the first implementations of V3C decoders are compatible with any future extension. For that a number of fields for future extensions to parameter sets were reserved.

For example, second edition of V3C introduced an extension in VPS related to MIV and packed video component.

| ... | |
|---|---|
| **vps_extension_present_flag** | u(1) |
| if( vps_extension_present_flag ) { | |
|   **vps_packing_information_present_flag** | u(1) |
|   **vps_miv_extension_present_flag** | u(1) |
|   **vps_extension_6bits** | u(6) |
| } | |
| if( vps_packing_information_present_flag ) { | |
|   for( k = 0 ; k <= vps_atlas_count_minus1; k++ ) { | |
|     j = vps_atlas_id[ k ] | |
|     **vps_packed_video_present_flag**[ j ] | |
|     if( vps_packed _video_present_ flag[ j ] ) | |
|       packing_information( j ) | |
|   } | |
| } | |
| if( vps_miv_extension_present_flag ) | |
|   vps_miv_extension( ) /*Specified in ISO/IEC 23090-12[1] */ | |
| if( vps_extension_6bits ) { | |
|   **vps_extension_length_minus1** | ue(v) |
|   for( j = 0; j < vps_extension_length_minus1 + 1; j++ ) { | |
|     **vps_extension_data_byte** | u(8) |
|   } | |
| } | |
| byte_alignment( ) | |
| } | |

A polygon mesh is a collection of vertices, edges and faces that defines the shape of a polyhedral object in 3D computer graphics and solid modelling. The faces usually consist of triangles (triangle mesh), quadrilaterals (quads), or other simple convex polygons (n-gons), since this simplifies rendering, but may also be more generally composed of concave polygons, or even polygons with holes. Objects created with polygon meshes are represented by different types of elements. These include vertices, edges, faces, polygons, and surfaces. In many applications, only vertices, edges and either faces or polygons are stored.

Polygon meshes are defined by the following elements:

- Vertex: A position in 3D space defined as (x, y, z) along with other information such as color (r, g, b), normal vector and texture coordinates.

- Edge: A connection between two vertices.
- Face: A closed set of edges, in which a triangle face has three edges, and a quad face has four edges. A polygon is a coplanar set of faces. In systems that support multi-sided faces, polygons and faces are equivalent. Mathematically a polygonal mesh may be considered an unstructured grid, or undirected graph, with additional properties of geometry, shape and topology.
- Surfaces: or smoothing groups, are useful, but not required to group smooth regions.
- Groups: Some mesh formats contain groups, which define separate elements of the mesh, and are useful for determining separate subobjects for skeletal animation or separate actors for non-skeletal animation.
- Materials: defined to allow different portions of the mesh to use different shaders when rendered.
- UV coordinates: Most mesh formats also support some form of UV coordinates which are a separate 2D representation of the mesh "unfolded" to show what portion of a 2-dimensional texture map applies to different polygons of the mesh. It is also possible for meshes to contain other vertex attribute information such as color, tangent vectors, weight maps to control animation, etc. (sometimes also called channels).

Mesh data can be compressed directly without projecting it to 2D planes, like in V-PCC based mesh coding. In fact, the anchor for V-PCC mesh compression call for proposals (CfP) utilizes off-the shelf mess compression technology, Draco for compressing mesh data excluding textures. Draco is used to compress vertex positions in 3D, connectivity data (faces) as well as UV coordinates. Additional per-vertex attributes may also be compressed using Draco. The actual UV texture may be compressed using traditional video compression technologies, such as H.265 or H.264.

An edgebreaker is an algorithm for efficient compression of 3D meshes. The edgebreaker encodes the connectivity of the triangle meshes. Because of the performance and simplicity of edgebreaker, it has been adopted in popular compression libraries.

Draco uses the edgebreaker algorithm at its core to compress 3D mesh information. It offers a good balance between simplicity and efficiency and is part of Khronos endorsed extensions for the glTF specification. The main idea of the algorithm is to traverse mesh triangles in a deterministic way so that each new triangle is encoded next to an already encoded triangle. This enables prediction of vertex specific information from the previously encoded data by simply adding delta to the previous data. Edgebreaker utilizes symbols to signal how each new triangle is connected to the previously encoded part of the mesh. Connecting triangles in such a way results on average in 1 to 2 bits per triangle when combined with existing binary encoding techniques.

Standardization works for Video-based dynamic mesh coding (ISO/IEC 23090-29: V-DMC) standardization works have started after the completion of the call for proposal (CfP) issued by MPEG 3DG (ISO/IEC SC29 WG 2) on integration of MESH compression into the V3C family of standards (ISO/IEC 23090-5). The retained technology after the CfP result analysis is based on multiresolution mesh analysis and coding. The input data of the V-DMC framework is a texture mesh sequence. The texture mesh sequence contains frames (or interchangeably "mesh frames" or "temporal frames") consisting of a textured mesh (i.e., a mesh with a set of vertices with geometry information and triangles) and a texture map (or interchangeably "attribute map"). The texture map comprises 2D texture/attribute coordinates associated to vertices and a texture/attribute image/frame. The texture coordinate of a vertex instructs what pixel (or interpolated pixel) of the texture image/frame should be used to "color" the vertex of the mesh. A normal vector is also associated to each vertex, to indicate the orientation of the surface around this vertex. The process may in general comprise the following:

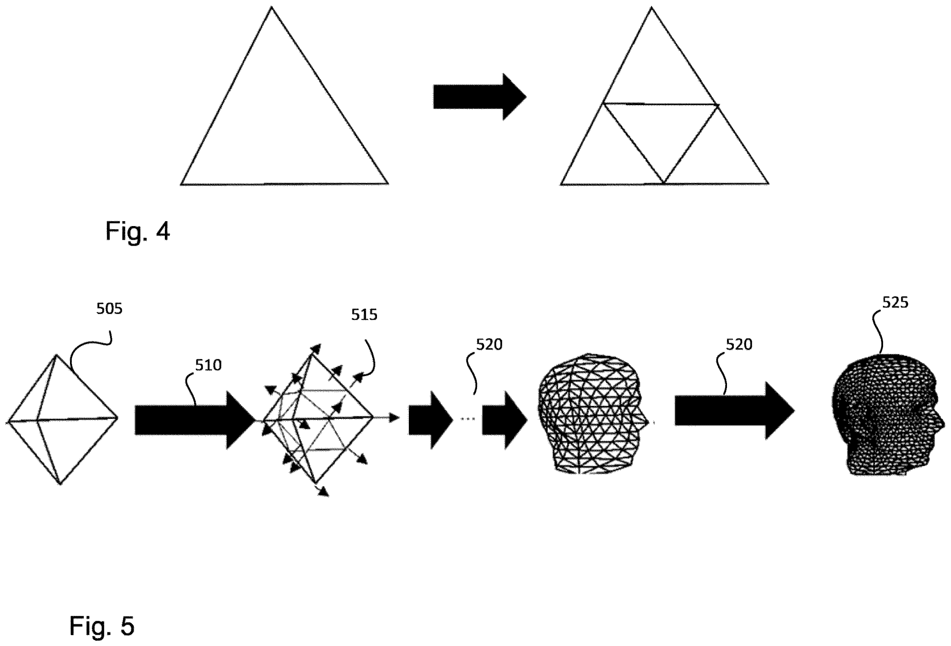

- generating a base mesh that is a simplified (low resolution) mesh approximation of the original mesh, called base mesh (this may be done for all frames of the dynamic mesh sequence) $m_i$
- generating a reconstructed base mesh by encoding, decoding, and reconstructing the base mesh in the encoder;
- performing several mesh subdivision iterative steps (e.g., each triangle is converted into four triangles by connecting the triangle edge midpoints as illustrated on Figure 4) on the reconstructed base mesh, generating other approximation meshes $m^n_i$ where $n$ stands for the number of iterations with $m_i = m^0_i$. The output of this process is a subdivided mesh. Each subdivision generates a level-of-detail (LOD), which means that the subdivided mesh representation contains different hierarchical levels (LODs) with LOD_0 corresponding to the base mesh, LOD_1 to the result of applying one iteration of subdivision to the reconstructed base mesh, etc.
- fitting the subdivided mesh to the original input base mesh.
- based on the fitting, defining displacement vectors $d_i$, also named error vectors, for each vertex of each mesh approximation $m^n_i$ with $n > 0$, noted $d^n_i$. The displacement vector corresponds to the shortest distance between the subdivided mesh vertex and the original mesh surface.
- For each subdivision level, the deformed mesh (or a displaced subdivided mesh), obtained by $m^n_i + d^n_i$, i.e., by adding the displacement vectors to the subdivided mesh vertices generates the best approximation of the original mesh at that resolution, given the base mesh and prior subdivision levels.

- The displacement vectors may undergo a lazy wavelet transform prior to compression.
- The attribute map of the original mesh is transferred to the deformed mesh at the highest resolution (i.e., subdivision level) such that texture coordinates are obtained for the deformed mesh and a new attribute map is generated.

In the case the mesh frame is encoded in INTER mode, a fitting is performed between the base mesh of the current frame and the base mesh of the reference frame. It means that for each vertex of the current base mesh frame, a motion vector will be estimated with respect to the corresponding vertex of the reference base mesh. The V-DMC encoder may then apply the motion vectors to the reference base mesh and then applies the subdivision process as explained above.

It is also possible to let the encoder to decide to avoid both simplification and subdivision steps and consider the input mesh frame as the base mesh frame. Motion vectors are estimated in the INTER mode for each vertex as explained above, but no subdivision step, nor LOD level, nor displacement vectors are generated in such case.

An example of a multi-resolution analysis of a mesh is illustrated in Figure 5. A base mesh 505 undergoes a first step of subdivision 510 and error vectors 515 are added to each vertex. After a series of subdivision and displacements 520, the highest resolution mesh 525 is generated. The connectivity of the highest resolution deformed mesh is generally different from the original mesh; however, the geometry of the deformed mesh is a good approximation of the original mesh geometry.

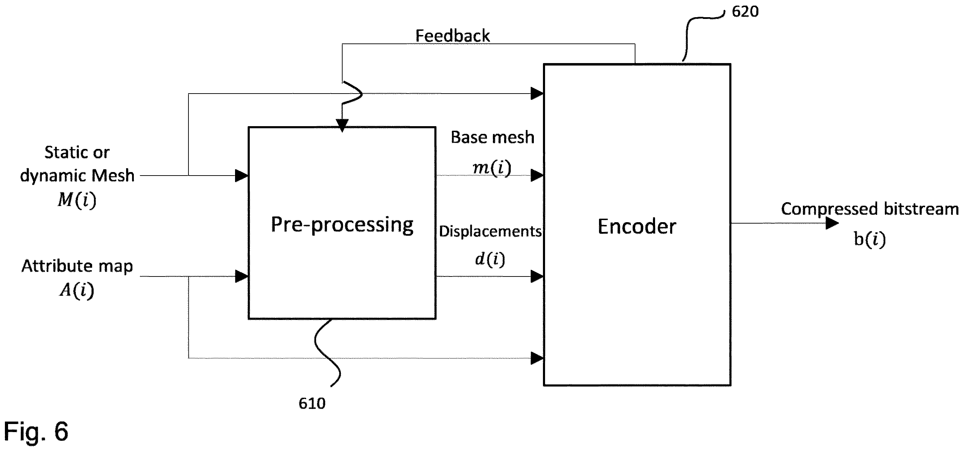

The encoding process can be separated into two main modules: the pre-processing module and the actual encoder module as illustrated on Figure 6. The pre-processing module 610 generates a base mesh and the displacement vectors (also referred to as "displacement coefficients"), given the input mesh sequence and its attribute maps. The encoder module 620 generates the compressed bitstream by ingesting the inputs and outputs of the pre-processing module.

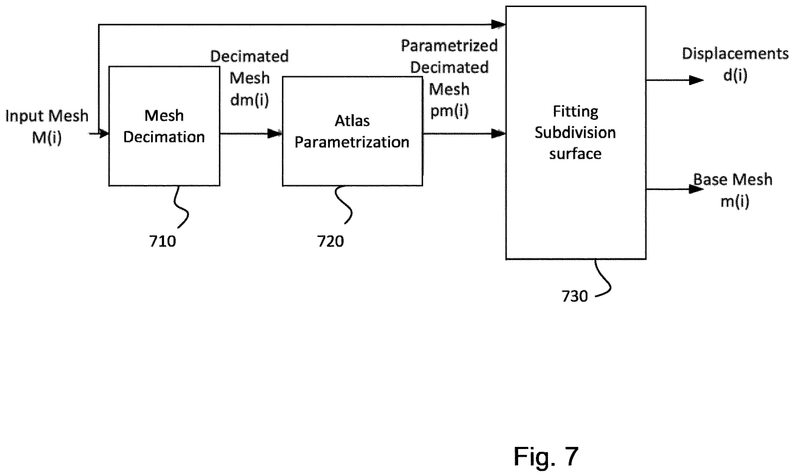

Figure 7 illustrates an example of basic pre-processing steps: decimation 710 (reducing the original mesh resolution to produce a base mesh), uv-atlas isocharting 720 (creating a parameterization of the base mesh) and the subdivision surface fitting 730.

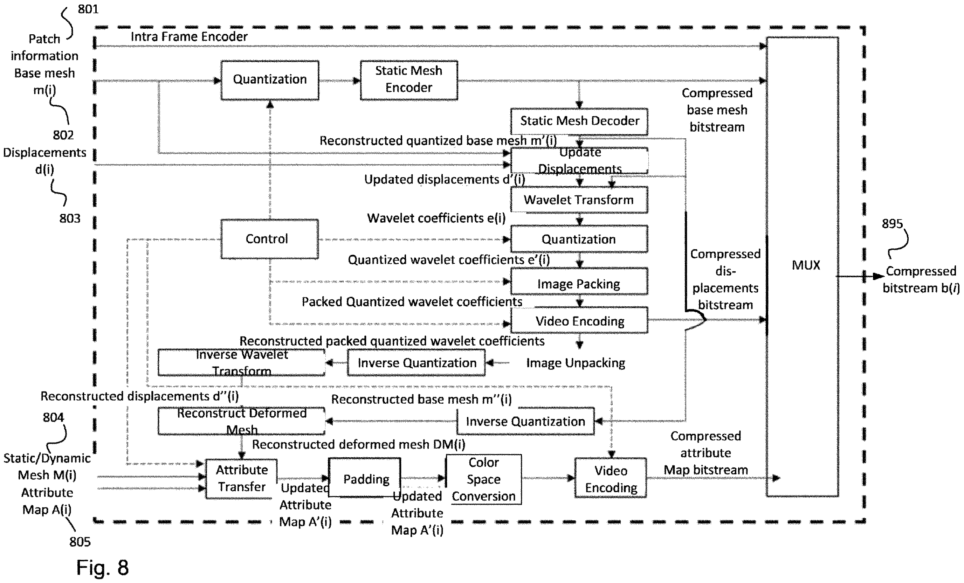

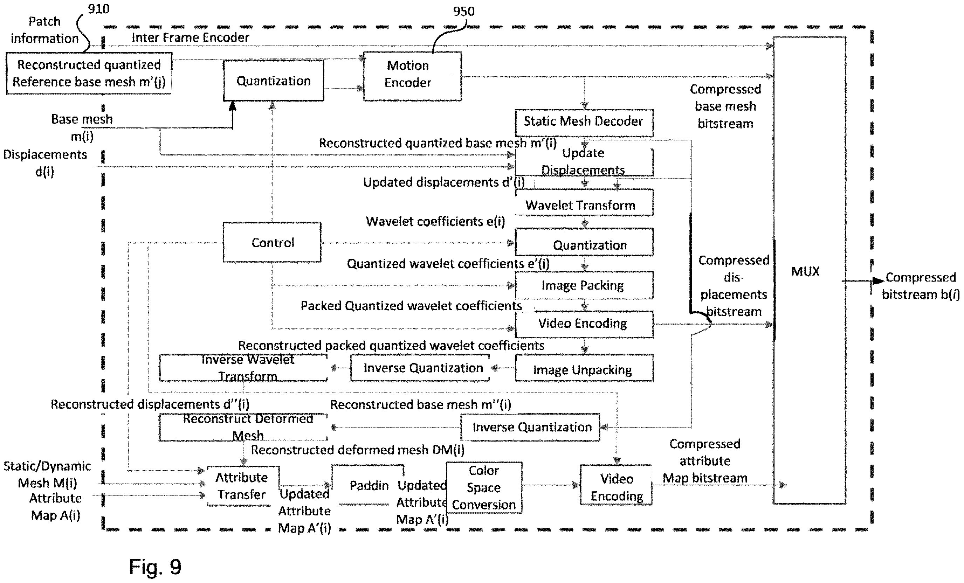

An example of an intra frame encoder is illustrated on Figure 8, and an example of an inter frame encoder is illustrated on Figure 9. In Figure 9, the base mesh connectivity of the first frame of a group of frames is imposed to the subsequent frame's base meshes to improve compression performance.

The encoder process for intra frame encoding of Figure 8 is described in more detailed manner. Inputs to the intra frame encoder are the base mesh 802 (that is an approximation of the input mesh but that contains less faces and vertices), the patch information 801 related to the input base mesh 802, the displacement vectors 803, the static/dynamic input mesh frame 804 and the attribute map 805. Outputs of the intra frame encoder is a compressed bitstream 895 that contains a V3C extended signalling sub-bitstream including patch data information, compressed base mesh sub-bitstream, a compressed displacement video component sub-bitstream and a compressed Attribute video component sub-bitstream. The intra frame encoder takes the input base mesh and first quantize its data in the Quantization module, which can be dynamically tuned by a Control Module. The quantized base mesh is then encoded with the static mesh encoder module, which outputs a compressed base mesh sub-bitstream that is multiplexed in the output bitstream. The encoded base mesh is decoded in the Static Mesh Decoder module that generates a reconstructed quantized base mesh. The Update Displacements module takes as input the reconstructed quantized base mesh, the pristine base mesh and the input displacement vectors to generate new updated displacement vectors that are remapped to the reconstructed base mesh data in order to avoid precision errors due to the static mesh encoding and decoding process. The updated displacement vectors are filtered with a wavelet transform in the Wavelet Transform module (that also takes as input the reconstructed base mesh) and then quantized in the Quantization module. The Wavelet Transform aims to reduce the redundancy of the displacement vectors so that they can be efficiently predicted based on their neighbours.

The quantized wavelet coefficients produced from the updated displacements are then packed into a video component in the Image Packing module. This video component is then encoded with a 2D video encoder such as HEVC, WC, etc., in the Video Encoder module, and the output compressed displacement video component sub-bitstream is multiplexed along with the V3C signalling information sub-bitstream into the output compressed bitstream. Then the compressed displacement video component is first decoded and reconstructed and then unpacked into encoded and quantized wavelet coefficients in the Image Unpacking module. These wavelet coefficients are then unquantized in the inverse quantization module and reconstructed with the inverse wavelet transform module that generates reconstructed displacements. The reconstructed base mesh is unquantized in the inverse quantization module and the unquantized base mesh is combined with the reconstructed displacements in the Reconstruct Deformed Mesh module to obtain the reconstructed deformed mesh. This reconstructed deformed mesh is then fed into the Attribute Transfer module together with the Attribute map produced by the pre-processing and the input static/dynamic mesh frame. The output of the Attribute Transfer module is an updated attribute map that now corresponds to the reconstructed deformed mesh frame. The updated attribute map is then padded, undergoes color conversion, and is encoded as a video component with a 2D video codec such as HEVC or WC, in the Padding, Color Conversion and Video encoder modules respectively. The output compressed attribute map bitstream is multiplexed into the encoder output bitstream.

Figure 9 illustrates an example of inter frame encoder. The inter encoding process is similar to the intra encoding process of Figure 8 with the following changes. The reconstructed quantized reference base mesh 910 is an input of the inter coding process. A module called Motion Encoder 950 takes as input the quantized input base mesh and the reconstructed quantized reference base mesh 910 to produce compressed motion information encoded as a compressed motion bitstream, which is multiplexed into the encoder output compressed bitstream. All other modules and processes are similar to the intra encoding case of Figure 8.

The compressed bitstream generated by the encoder multiplexes:

- A sub-bitstream with the encoded base mesh using a static mesh codec;
- A sub-bitstream with the encoded motion data using an animation codec for base meshes in case INTER coding is enabled;
- A sub-bitstream with the wavelet coefficients being generated by applying wavelet transform to the displacement vectors, the wavelet coefficients being packed in an image and encoded using a video codec;
- A sub-bitstream with the attribute map encoded using a video codec;
- A sub-bitstream that contains all metadata required to decode and reconstruct the mesh sequence based on the aforementioned sub-bitstreams. The signalling of the metadata is based on the V3C syntax and includes necessary extensions that are specific to meshes.

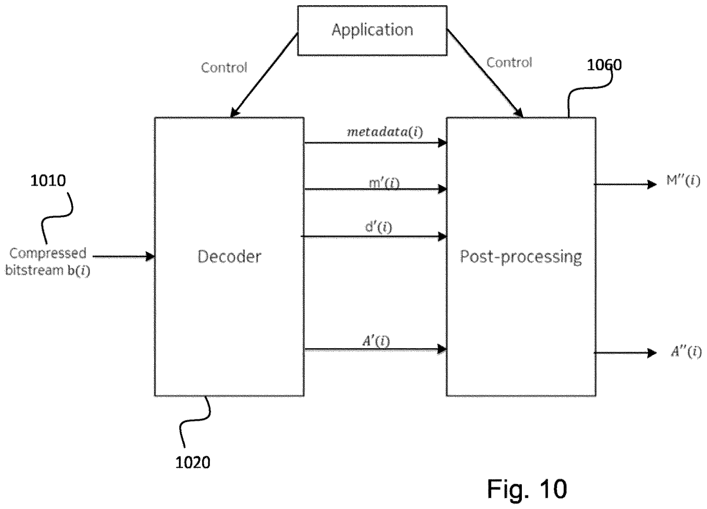

The decoding process is illustrated on Figure 10. The decoding process comprises a decoder module 1020 that demultiplexes the compressed bitstream 1010 sub-bitstreams that are reconstructed, i.e., metadata, reconstructed base mesh, reconstructed displacements, and the reconstructed attribute map data. The reconstruction of the dynamic mesh sequence is performed based on that data in the post-processing module 1060.

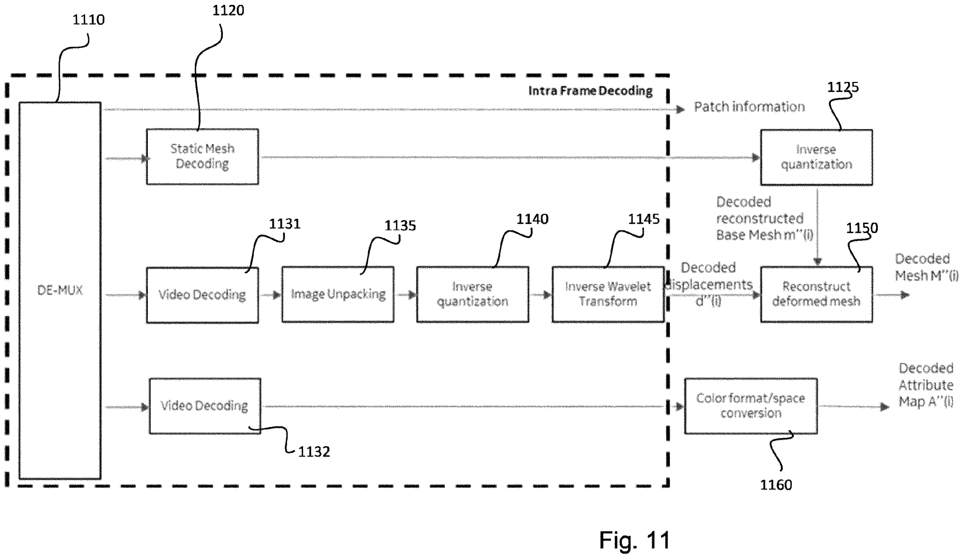

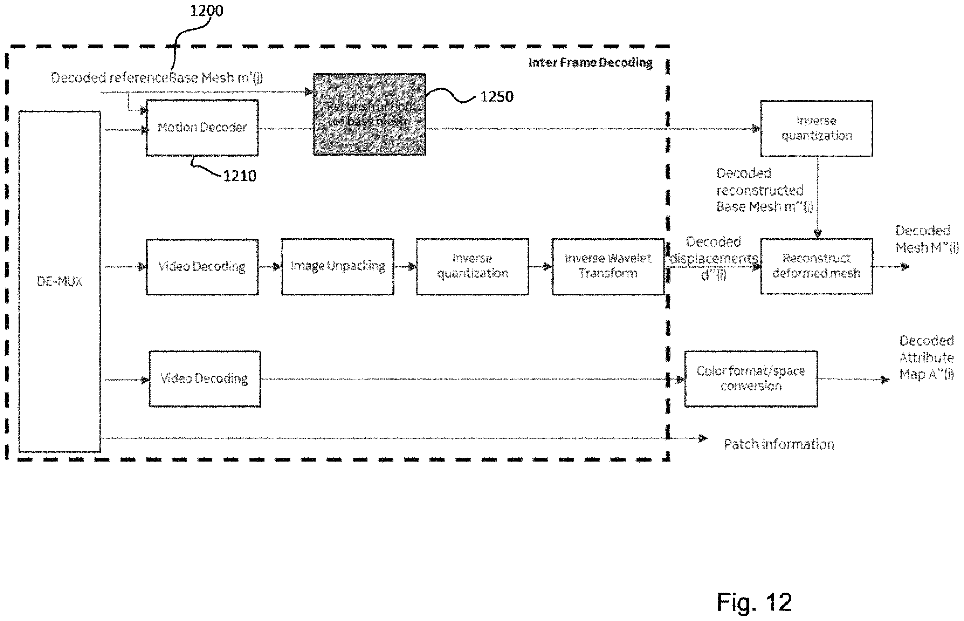

Figure 11 illustrates an example of decoding process in intra mode, and Figure 12 illustrates the decoding process in inter mode.

The intra frame decoding process according to Figure 11, consists in the following modules and processes. First the input compressed bitstream is demultiplexed 1110 into V3C extended atlas data information (or patch information), a compressed static mesh bitstream, a compressed displacement video component and a compressed attribute map bitstream, respectively. The static mesh decoding module 1120 converts the compressed static mesh bitstream into a reconstructed quantized static mesh, which represents a base mesh. This reconstructed quantized base mesh undergoes inverse quantization in the inverse quantization module 1125 to produce a decoded reconstructed base mesh.

The compressed displacement video component bitstream is decoded in the video decoding module 1131 to generate a reconstructed displacement video component. This reconstructed displacement video component is unpacked into reconstructed quantized wavelet coefficients in the image unpacking module 1135. Reconstructed quantized wavelet coefficients are inverse quantized in the inverse quantization module 1140 and then undergo an inverse wavelet transform in the inverse wavelet transform module 1145, that produces decoded displacement vectors. The reconstruct deformed mesh module 1150 takes into account the patch information and takes as input the decoded reconstructed base mesh and decoded displacement vectors to produce the output decoded mesh frame. The compressed attribute map video component is decoded at video coding module 1132, and optionally undergoes color conversion 1160 to produce a decoded attribute map frame that corresponds to the decoded mesh frame.

The inter decoding process of Figure 12 is similar to the intra decoding process of Figure 11 with the following changes. The decoder also demultiplexes a compressed information bitstream. A decoded reference base mesh 1200 is taken as input of a motion decoder module 1210 together with the compressed motion information sub-bitstream. This decoded reference base mesh is selected from a buffer of previously decoded base mesh frames (by the intra decoder process for the first frame of a group of frames). The reconstruction of base mesh module 1250 takes the decoded reference base mesh and the decoded motion information as input to produce a decoded reconstructed quantized base mesh. All other processes are similar to the intra decoding process of Figure 11.

The signalling of the metadata and sub-bitstreams produced by the encoder and ingested by the decoder was proposed as an extension of V3C in the technical submission to the dynamic mesh coding CfP and should be considered as purely indicative for the moment. It is as follows and mainly consists in additional V3C unit header syntax, additional V3C unit payload syntax, and Mesh Intra patch data unit.

**V3C unit header syntax:**

| v3c_unit_header( ) { | Descriptor |
|---|---|
| **vuh_unit_type** | u(5) |
| if( vuh_unit_type == V3C_AVD ‖ vuh_unit_type == V3C_ GVD ‖ vuh_unit_type == V3C_OVD ‖ vuh_unit_type == V3C_A D ‖ vuh unit type==V3C MD) { | |
| **vuh_v3c_parameter_set_id** | u(4) |
| **vuh_atlas_id** | u(6) |
| } | |
| ... | |
| else if( vuh_unit_type==V3C_MD ) { | |
| **vuh_mesh_data_sample_stream_flag** | u(1) |
| **vuh_mesh_data_motion_field_present_flag** | u(1) |
| **vuh_reserved_zero_15bits** | u(15) |
| } | |
| Else | |
| **vuh_reserved_zero_27bits** | |
| } | |

**V3C unit payload syntax:**

| v3c_unit_payload( numBytesInV3CPayload ) { | Descriptor |
|---|---|
| if( vuh_unit_type == V3C_VPS ) | |
| v3c_parameter_set( numBytesInV3CPayload ) | |
| else if( vuh_unit_type == V3C_AD) | |
| atlas_sub_bitstream( numBytesInV3CPayload ) | |
| else if( vuh_unit_type == V3C_MD) | |
| mesh_sub_bitstream( numBytesInV3CPayload) | |
| else if( vuh_unit_type == V3C_OVD ‖ vuh_unit_type == V3C_GVD ‖ vuh_unit_type == V3C_AVD) | |
| video_sub_bitstream( numBytesInV3CPayload ) | |
| } | |

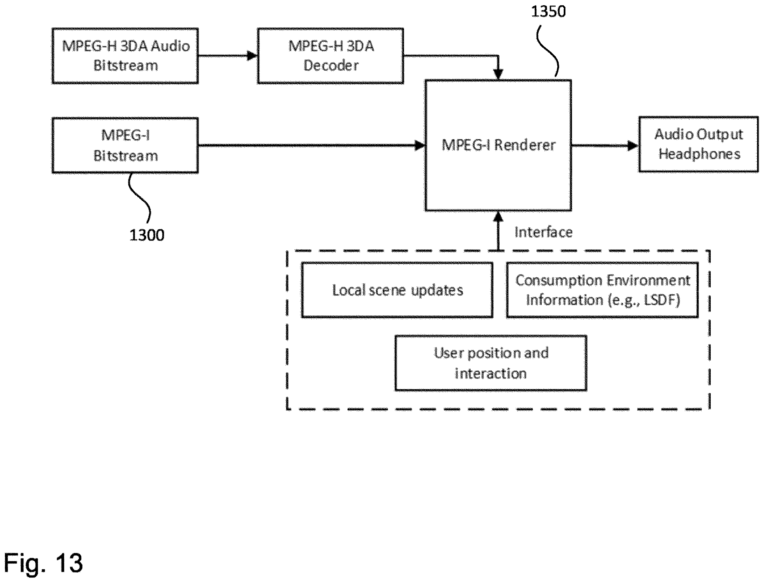

Figure 13 illustrates the high level architecture of the MPEG-I Immersive Audio (ISO/IEC 23090-4) specification being standardized in ISO/IEC JTC 1/SC 29/WG 6 MPEG Audio coding. The MPEG-I bitstream 1300 which enables the rendering of the audio scene, and the renderer 1350 are the main focus of the specification. The input to the renderer 1350 can also arrive via user interactions, local scene updates and the listener space information.

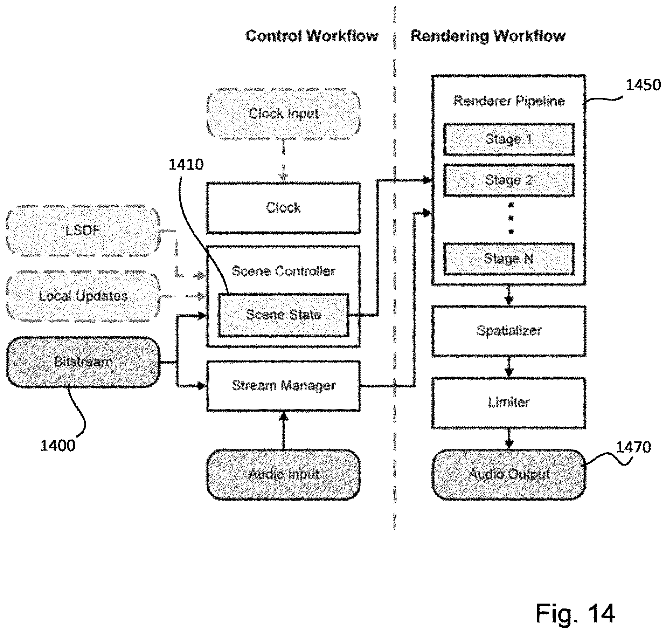

Some of the components of the renderer 1350 are described with reference to Figure 14 (figure originating from ISO/IEC 23090-4). The rendering stages perform the acoustic processing effects as specified in the bitstream using the scene description information in the bitstream 1400. The scene information and the listener information and interactions are represented by the scene state 1410 which is used by the rendering pipeline 1450 to generate the rendered audio 1470.

MPEG developed audio compression solution integrates scene geometry in the compressed bitstream that allows to synthesize the spatial audio from any position in the scene. N00169 ISO/IEC 23090-4 describes the scene description as input to the encoder. This is a triangular mesh described in XML. The N00168 ISO/IEC 23090-4 describes the bitstream for 6DoF audio rendering which comprises acoustic effects such as early reflections, diffuse late reverberation, diffraction, audio sources with spatial extent, among others that require scene geometry information. The rendering stages, such as, reverb, early reflections, diffraction, heterogeneous extent, homogeneous extent, require scene geometry information.

The MPEG-I bitstream information is abstracted as new type of MHAS (MPEG-H Audio Stream) packets in addition to the ones described for MPEG-H 3DA (ISO/IEC 23008-3). The new MHAS packet types are PACTYP_MPEGI_CFG, PACTYP_MPEGI_PLD, PACTYP_MPEGI_UPD, these carry information about the audio render configuration according to the scene, the audio rendering metadata as well as scene data and the scene update information. The configuration packet is a lightweight packet carrying relevant information to initialize the renderer. The scene update packet carries timed update (e.g., animation of an audio element position) and interaction related updates that are known during scene creation and information about updates that are unknown during the start of audio scene consumption (or start of audio scene timeline).

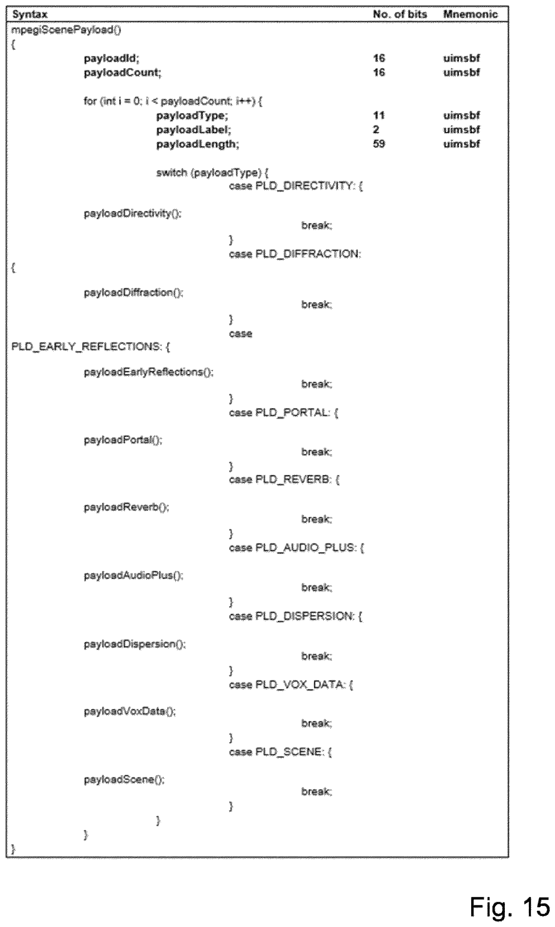

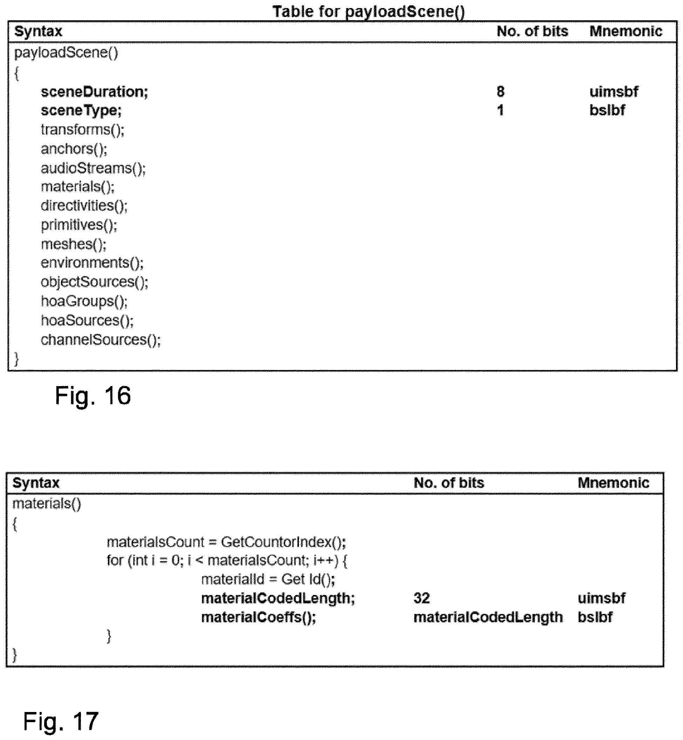

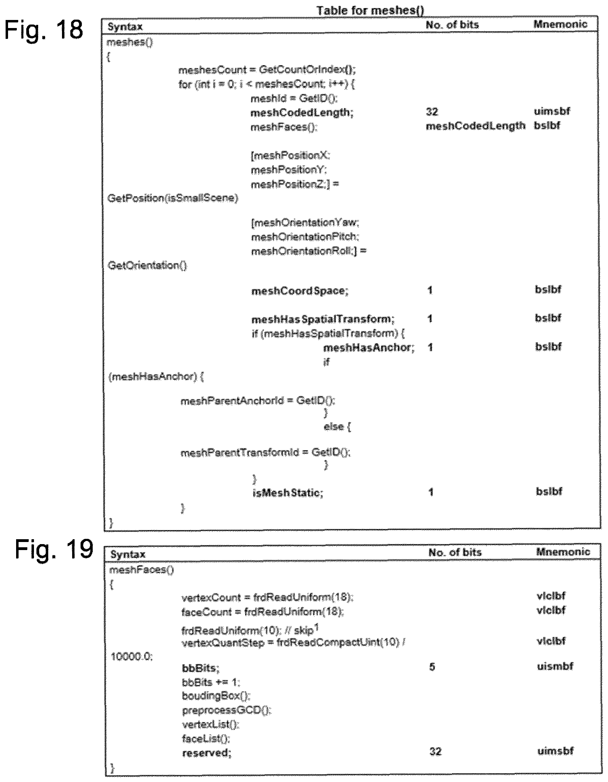

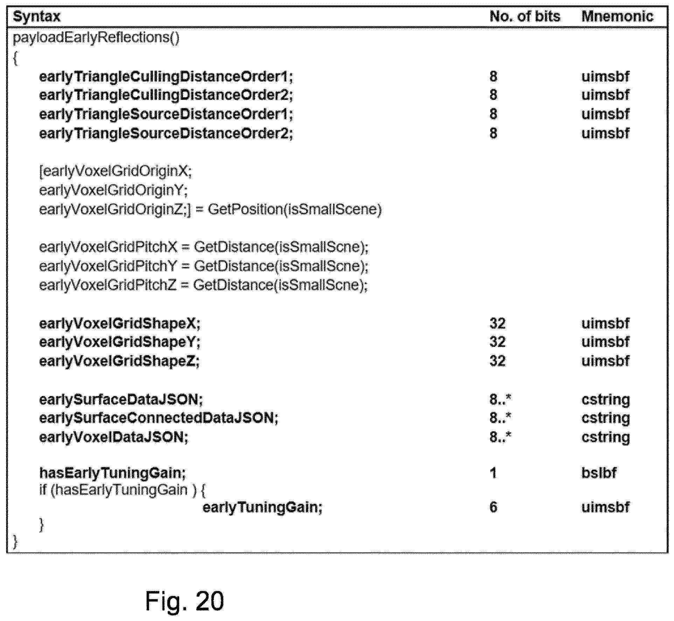

The scene payload description carried by the PACTYP_MPEGI_PLD is presented in Figure 15. The scene payload description has a parameter payloadType, which carries geometry information for audio rendering. Figure 16 shows a syntax for payloadScene comprising selected bitstream elements. Figures 16 - 20 provide background information for the data being carried in the payloadType. The syntax tables shown in Figures 16 - 20 originate from ISO/IEC 23090-4. The relevant ones with respect to the present embodiments are materials of Figure 17 and meshes of Figure 18.

Audio scene changes are indicated via audio scene updates, which also includes change in geometry or audio element positions or state. The complexity of the audio rendering depends on the geometric resolution of the scene, the more vertices and the higher the geometric detail, the more complex the audio rendering becomes. There are different orders of reflections that are employed based on the available bitrate and computational complexity.

6DoF audio and visual experiences require understanding of scene geometry, which allows to synthesize audio and visual experiences when the user moves in the scene. For example, both M-IIA and V-DMC require the scene geometry to synthesize audio and visual effects. This is fundamental characteristic of the compression for both standards. However, each media encoding/decoding procedures may be defined separately, as is the case in these projects, where each is managed in different Working Group of ISO/IEC SC29. That leads to duplication of work, and more important can lead to duplication of data when both media are stored/delivered to the same end client.

Encoding scene geometry in M-IIA and V-DMC bitstreams separately is suboptimal as it duplicates the amount of information stored/delivered. Audio renderer does not need the same level of geometric detail as the visual renderer. In fact, audio synthesis becomes quickly encumbered by the increase of geometric details in the scene. Therefore, very complex meshes are explicitly excluded from the current audio standardization process. On the other hand, visual scenes often greatly benefit from high geometry details.

V-DMC based compression leverages a concept of a rough/base mesh, which approximates rough geometric shape of an object. The base mesh contains fewer vertices than the original object and as such it would make a good candidate for the geometry of the audio scene. Further geometric details are added to the base mesh by subdividing it and applying the displacement information for the generated vertices encoded in the V-DMC bitstream.

ISO/IEC JTC 1/SC 29/WG 3 m62228 "Immersive Audio in Scene Description" discusses how a scene of geometry and scene information provided by MPEG scene description can be utilized by M-IIA. The document is about removing scene geometry from the M-IIA and utilize glTF information to ensure consistence when presented to the end user.

ISO/IEC JTC 1/SC 29/WG 3 N0186 "Considerations on MPEG-I audio and MPEG-I scene description architectures" explores options related to achieving interworking between M-IIA and SD. The document proposes identification of redundancy in geometry information delivered via M-IIA bitstream and SD.

The purpose of the present embodiments is to improve the technology by proposing a solution that utilizes the inter-dependency between V-DMC base mesh and M-IIA audio mesh to reduce the amount of data stored/transmitted in a system. The present embodiments can be used to obtain scene geometry information from the visual content bitstream for rendering the audio scene as well as obtaining scene geometry information from the audio content bitstream for rendering the video scene. The present embodiments can operate at the encoder level, not application level, which makes it a more generic solution.

Considering that it is less than desirable to encode the scene geometry twice, once for immersive audio and once for visual content, it makes sense to try to re-use the mesh-coding formats between M-IIA and V-DMC. This can work either way, V-DMC base-mesh can be used as the mesh for the M-IIA decoder or M-IIA scene format can be used to store the base-mesh for the V-DMC decoder (Figure 5 illustrates the V-DMC base mesh concept).

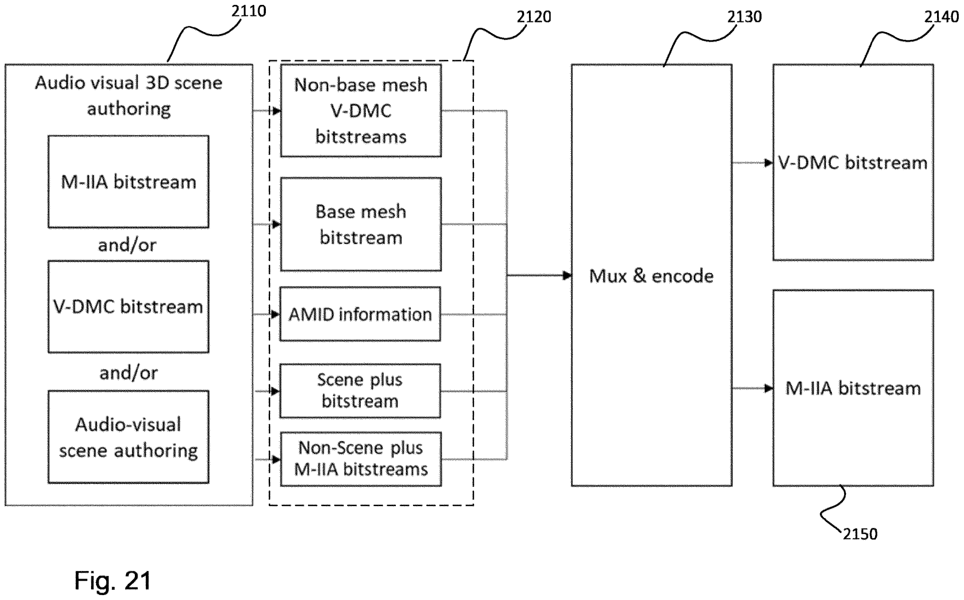

Figure 21 illustrates a high-level architecture for an encoder according to an embodiment. The encoder receives an encoded audio-visual 3D scene information 2110 via one or more V-DMC bitstreams and M-IIA bitstreams or raw audio-visual 3D scene information via audio-visual scene authoring entity/software. The encoder is configured to generate or extract components 2120 comprising at least one base geometry component and

- zero or more geometry displacement components to reconstruct detailed geometry,
- zero or more visual attribute components describing the visual properties of the base geometry component or the reconstructed detailed geometry,
- zero or more audio material identifier components describing the audio material identifiers for the base geometry component,
- zero or more audio attribute components describing the audio properties of the base geometry component and
- zero or more general audio properties for the scene not pretraining to the base geometry.

The encoder encodes at an encoding module 2130 the generated or extracted components 2120 such that the at least one base geometry component is encoded only once either in one or more M-IIA bitstreams 2150 or V-DMC bitstreams 2140. An indication about the missing base geometry component is inserted in either the one or more M-IIA bitstreams 2150 or the one or more V-DMC bitstreams 2140, which do not contain the base geometry information.

In Figure 21, "non-base mesh V-DMC bitstreams" refer to "enhancement layers" or attribute bitstreams, i.e., the one or more V-DMC bitstreams, which do not contain the base geometry information. Similarly, the "non-scene plus M-IIA bitstreams" refer to M-IIA bitstreams that do not contain the scene plus payloads. Rather, the M-IIA bitstream includes other rendering and scene information parameters in the acoustic bitstreams. Scene plus payloads relates to the audio scene description information that is carried as part of the MPEG-I Immersive audio bitstream, according to the WD2 ISO/IEC 23090-4.

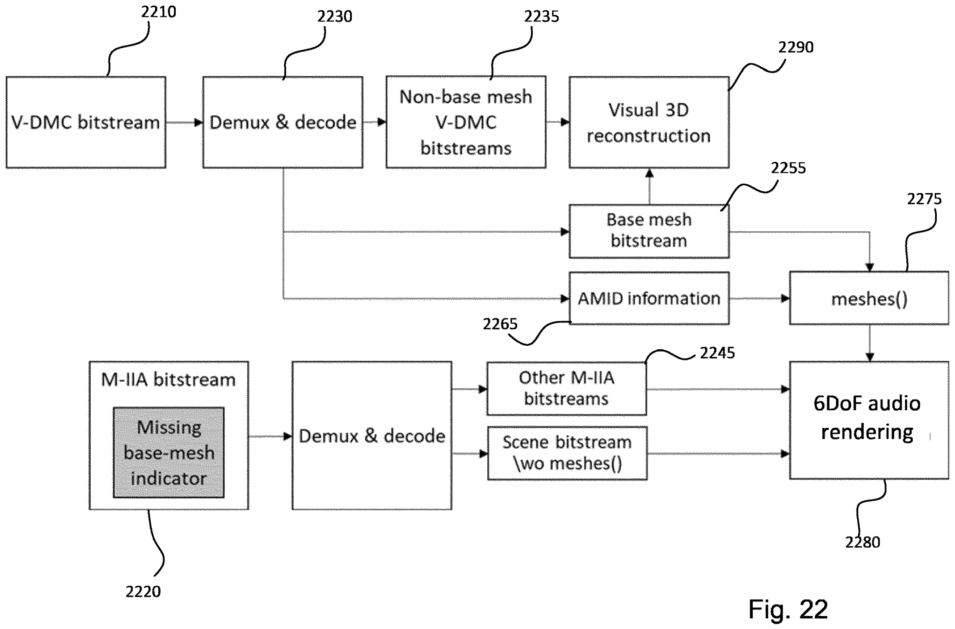

Figure 22 illustrates a high-level example of a decoder for an embodiment, where base geometry is encoded in V-DMC bitstream. The decoder can be a functional element of a receiver. The decoder receives and parses one or more M-IIA bitstreams 2220 and/or V-DMC bitstreams 2210. The decoder is configured to identify that the one or more M-IIA bitstreams 2220 do not contain base geometry information, and therefore decodes the base geometry component along with audio material identifier component from the one or more V-DMC bitstreams 2210 at the decoding module 2230. The decoder reconstructs the one or more meshes() M-IIA component 2275 from the decoded base geometry component 2255 and the audio material identifier component 2265, and uses the reconstructed meshes() component 2275 along with the other M-IIA bitstreams 2245 at 6DoF audio rendering 2280. Lastly, the decoder is configured to use the decoded base geometry component 2255 along with the non-base geometry V-DMC components 2235 to reconstruct the visual scene at the visual 3D reconstruction module 2290.

In Figure 22, "non-base geometry V-DMC bitstreams" refer to "enhancement layers" or attribute bitstreams, i.e., the one or more V-DMC bitstreams that do not contain the base geometry information.

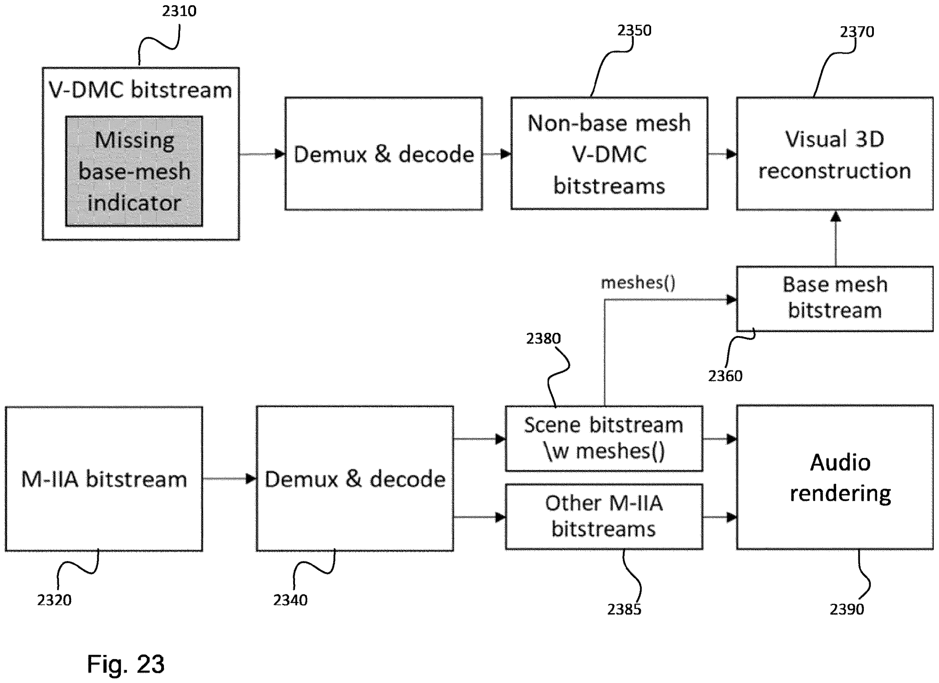

Figure 23 illustrates a high-level example of a decoder for an embodiment, where base geometry is encoded in M-IIA bitstream. The decoder can be a functional element of a receiver. The decoder receives and parses one or more M-IIA bitstreams 2320 and/or V-DMC bitstreams 2310, and identifies that the one or more V-DMC bitstreams do not contain base geometry information. Therefore, the decoder decodes and reconstructs the base geometry component from the one or more M-IIA bitstreams 2320 at the decoder module 2340, and uses the reconstructed base geometry component 2360 along with the non-base mesh V-DMC bitstreams 2350 to reconstruct a visual scene at visual 3D reconstruction module 2370. The decoder uses the decoded base geometry component 2380 along with the other M-IIA bitstreams 2385 to reconstruct the audio scene information to perform the audio rendering 2390.

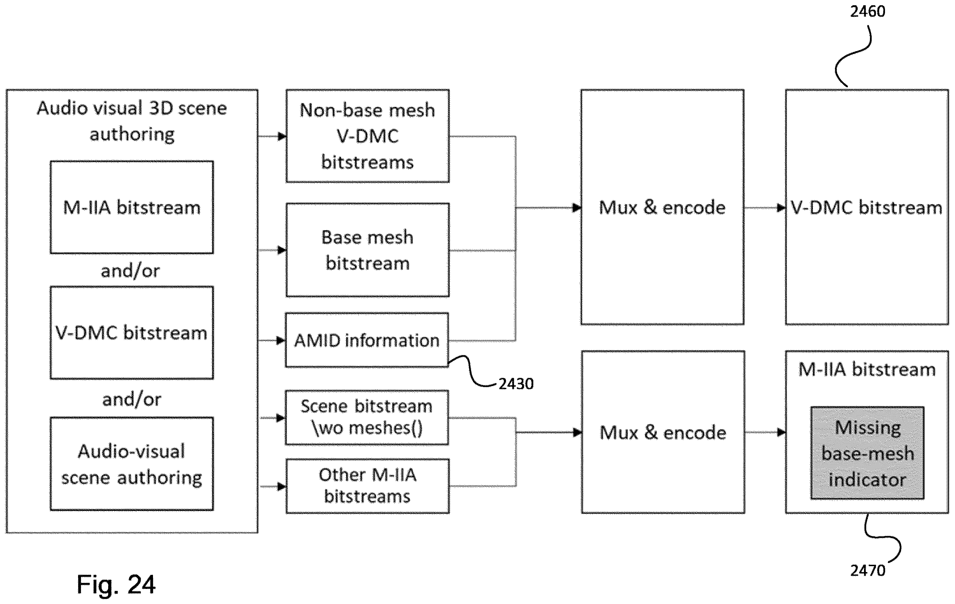

Compared to Figure 21, Figure 24 illustrates a more detailed illustration of an encoder for an embodiment where the base geometry is not signaled as part of M-IIA bitstream 2470, and where the base mesh geometry is signaled in the V-DCM bitstream 2460. The M-IIA bitstream 2470 comprises an encoded indicator of the missing base-mesh.

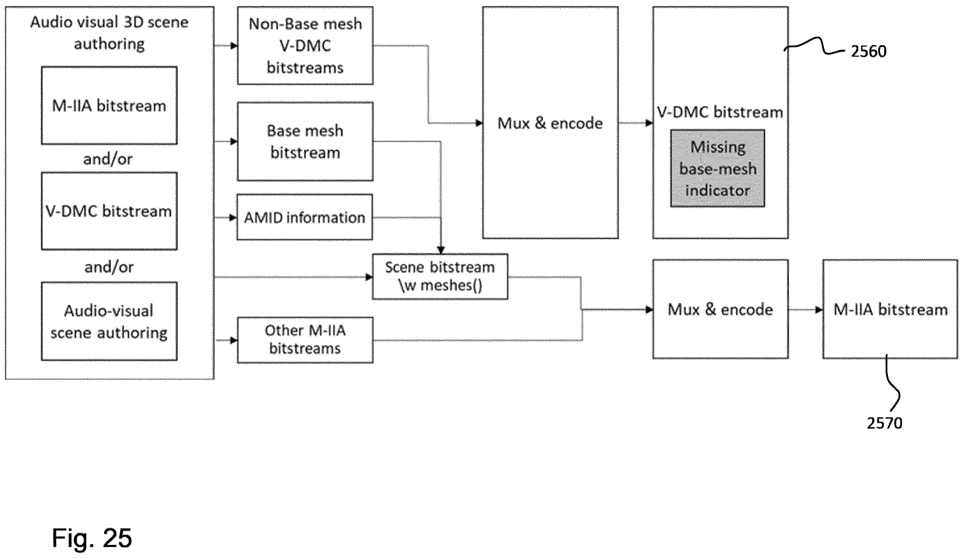

Compared to Figure 21, Figure 25 illustrates a more detailed illustration of an encoder for an embodiment where the base geometry is not signaled as part of V-DMC bitstream 2560, and where the base mesh geometry is signaled in the M-IIA bitstream 2570. The V-DMC bitstream 2560 comprises an encoded indicator of the missing base-mesh.

In both cases, the encoder receives the 3D scene either via M-IIA or V-DMC bitstream or is authored directly using a dedicated audio-visual scene modelling software. In Figure 24, "non-base mesh V-DMC bitstreams" refer to "enhancement layers" or other attribute bitstreams, i.e., the one or more V-DMC bitstreams, which do not contain the base geometry information.

The present embodiments also relate to signaling of the acoustic material identifiers (AMID) 2430 when the base geometry is encoded in the V-DMC, as in Figure 24.

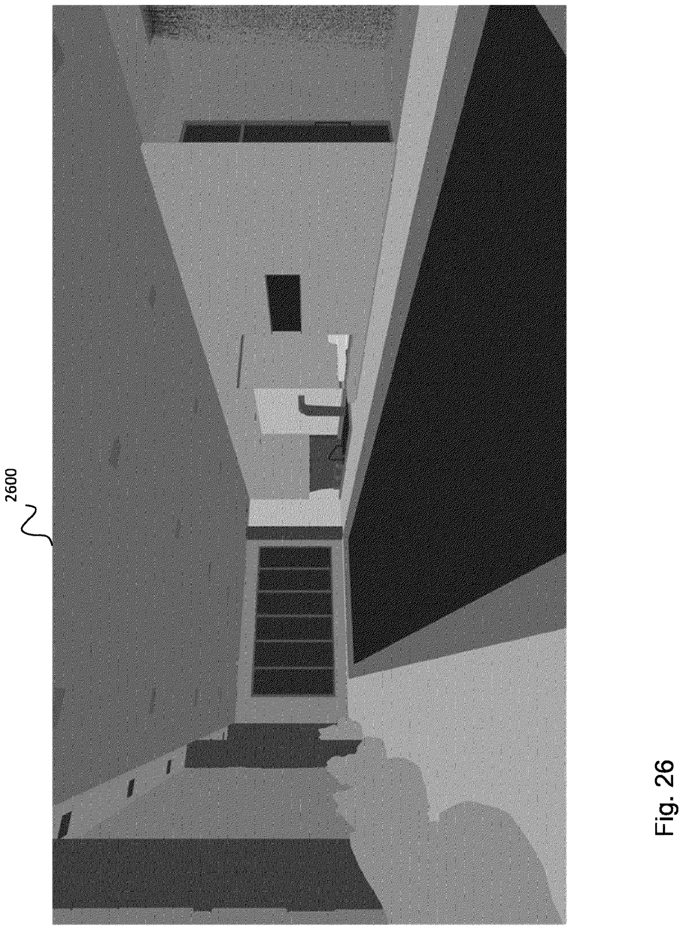

According to an embodiment, the AMID 2430 (shown in Figure 24) may be encoded as a new attribute video component in the V-DMC bitstream 2460, where the AMID values are provided as a texture, as illustrated by an audio material identifier map 2600 in Figure 26. Every pixel in the map 2600 corresponds to an audio material identifier that can be mapped to the audio material description in M-IIA bitstream. An additional table may be carried as part of V3C parameter set extension, V3C common atlas parameter set extension, or any other parameter set extension or SEI message.

According to another embodiment, the V-DMC bitstream is composed of one or more submeshes, and the AMID values are segmented accordingly and map to different tiles corresponding to their respective submesh.

In another embodiment, the AMID may be encoded as a separate channel of the material index attribute map (e.g., visual material identifier in Y channel, and acoustic material identifier in U or V channel). Similarly to AMID map (as in the above embodiment, shown in Figure 26), the V-DMC bitstream may contain a material index (MID) map, which indicates per pixel which visual material should be applied to a given surface. To include AMID in the same map with MID information, signaling shall be included in the V-DMC bitstream to communicate that the MID map contains also AMID information. This signaling may be included in V3C parameter set extension or any other parameter set extension or as SEI message.

The AMID information may be interleaved in the MID map by allocating various numbers of bits per channel that are reserved for MID and AMID. As an example, four bits for each MID and AMID may be allocated, in which case the low four bits for luma channel may be used to indicate the MID and high four bits for luma channel may be used to indicate the AMID information. Alternative AMID and MID may be encoded in different channels of the same texture.

An additional table linking the integer AMID and MID values into string/textual material identifiers may be included in the V-DMC bitstream.

According to another embodiment, the MID map may also be segmented according to the V-DMC segmentation into independently decodable submeshes, and the map can be modified to allow decoding of the AMID information corresponding to a submesh to be placed in the same independently decodable MID map tile.

According to yet another embodiment, AMID information may be encoded in the base-mesh as an additional attribute. As an example, Draco or similar static mesh coding algorithm may be used to encode mesh information along with the additional attributes. In such case, the AMID can be added as a per-face attribute for the mesh, or even a sub-mesh level attribute if per-face signaling is too detailed. As an example, in ply-file these additional attributes may be signaled as follows per face:

```
element face 10
property list uchar int vertex_index
property uchar int amid
```

Furthermore, the signaling of missing base geometry needs to be included in the M-IIA and V-DMC bitstreams when the base geometry is carried in the other bitstream. This can be done by encoding an indicator of the missing base mesh.

The indicator inside V-DMC bitstream which informs the receiver that there is no base-geometry component, can in one embodiment be done by using profiles. For example, like MIV defines geometry absent profile, the V-DMC bitstream may define base-geometry absent profile. Alternatively, a dedicated flag may be introduced in the V-DMC parameter set. A third option would be to define file-format level signaling that would further indicate the M-IIA bitstream that contains the meshes that can be converted into base-geometry.

According to an embodiment, where the mesh information is carried in the V-DMC bitstream instead of the M-IIA bitstream, the payloadType PLD_SCENE (which is a specific type of MHAS payload packet) (described in ISO/IEC 23090-4 WD2) can be modified such that the meshes data structure only carries the indication that the mesh information should be obtained from a URI where the URI refers to the V-DMC bitstream. According to other embodiments relating to the implementation, instead of a URI, any other explicit indicator or flag can be included.

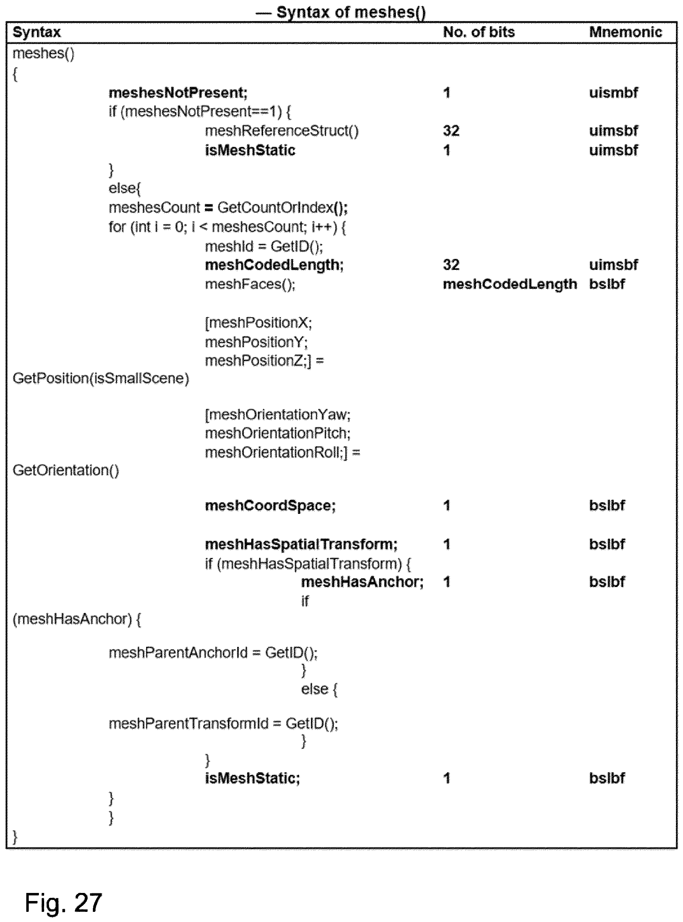

Figure 27 illustrates a syntax of meshes(). In the syntax meshesNotPresent having value 0 indicates that all meshes are present in the M-IIA bitstream, whereas a value equal to 1 indicates that all meshes are delivered externally via other channels.

Other option is to replace each individual mesh separately. In such case the replacement with mesh information in the M-IIA bitstream can be done per mesh. Consequently, the presence of mesh data in the accompanying bitstream (outside the M-IIA bitstream) is for each individual mesh in the audio scene. In such case meshesNotPresent may have a value 0 to indicate that all meshes are present in the M-IIA bitstream, or a value 1 to indicate that all meshes are delivered externally via other channels, or a value 2 to indicate that a subset of meshes is delivered externally via other channels.

```
meshReferencestruct () has the following semantics:
  meshReferencestruct() {
      unsigned int(2) referenceType;
      switch (payloadType) {
          case REF_TYPE_VDMC: {
                  unsigned int16) meshID_VDMC;
                  break;
           }
          case REF__TYPE_VDMC_submesh: {
```

```
                unsigned int(16) submeshID_VDMC;
                break;
          }
        case REF_TYPE_SD: {
                unsigned int(16) nodeID;
                break;
          }
        case REF_TYPE_SD_OTHER: {
                utf8string mesh_reference_scheme URI;
                break;
          }
      }
  }
```

In above, referenceType represents different types of references from M-IIA bitstream to the V-DMC, SD or other generic reference.

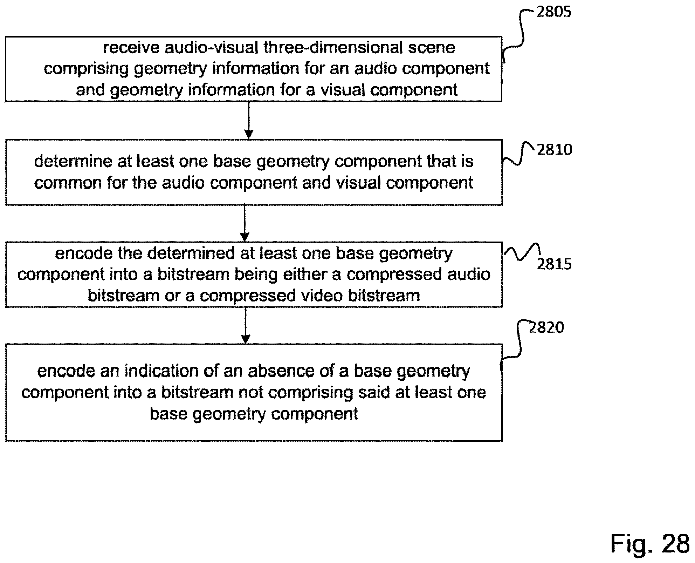

The method for encoding according to an embodiment is shown in Figure 28. The method generally comprises receiving 2805 audio-visual three-dimensional scene comprising geometry information for an audio component and geometry information for a visual component; determining 2810 at least one base geometry component that is common for the audio component and visual component; encoding 2815 the determined at least one base geometry component into a bitstream being either a compressed audio bitstream or a compressed video bitstream; and encoding 2820 an indication of an absence of a base geometry component into a bitstream not comprising said at least one base geometry component. Each of the steps can be implemented by a respective module of a computer system.

An apparatus according to an embodiment comprises means for receiving audio-visual three-dimensional scene comprising geometry information for an audio component and geometry information for a visual component; means for determining at least one base geometry component that is common for the audio component and visual component; means for encoding the determined at least one base geometry component into a bitstream being either a compressed audio bitstream or a compressed video bitstream; and means for encoding an indication of an absence of a base geometry component into a bitstream not comprising said at least one base geometry component. The means comprises at least one processor, and a memory including a computer program code, wherein the processor may further comprise processor circuitry. The memory and the computer program code are configured to, with the at least one processor, cause the apparatus to perform the method according to various embodiments.

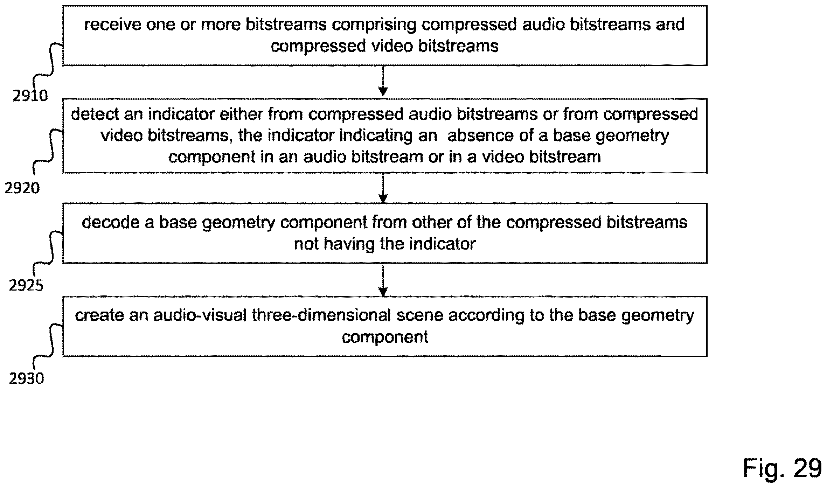

The method for decoding according to an embodiment is shown in Figure 29. The method generally comprises receiving 2910 one or more bitstreams comprising compressed audio bitstreams and compressed video bitstreams; detecting 2920 an indicator either from compressed audio bitstreams or from compressed video bitstreams, the indicator indicating an absence of a base geometry component in an audio bitstream or in a video bitstream; decoding 2925 a base geometry component from other of the compressed bitstreams not having the indicator; and creating 2930 an audio-visual three-dimensional scene according to the base geometry component. Each of the steps can be implemented by a respective module of a computer system.

An apparatus according to an embodiment comprises means for receiving one or more bitstreams comprising compressed audio bitstreams and compressed video bitstreams; means for detecting an indicator either from compressed audio bitstreams or from compressed video bitstreams, the indicator indicating an absence of a base geometry component in an audio bitstream or in a video bitstream; means for decoding a base geometry component from other of the compressed bitstreams not having the indicator; and means for creating an audio-visual three-dimensional scene according to the base geometry component. The means comprises at least one processor, and a memory including a computer program code, wherein the processor may further comprise processor circuitry. The memory and the computer program code are configured to, with the at least one processor, cause the apparatus to perform the method according to various embodiments.

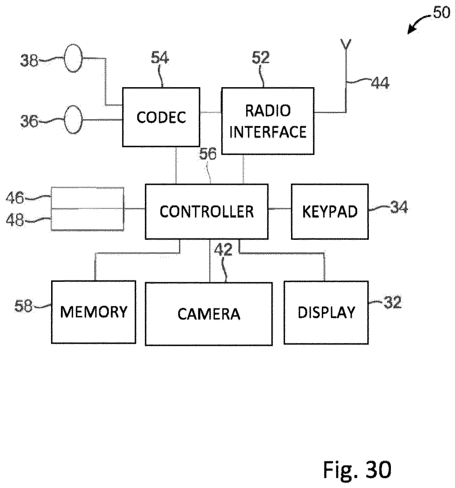

An example of an apparatus is disclosed with reference to Figure 30. Figure 30 shows a block diagram of a video coding system according to an example embodiment as a schematic block diagram of an electronic device 50, which may incorporate a codec. In some embodiments the electronic device may comprise an encoder or a decoder. The electronic device 50 may for example be a mobile terminal or a user equipment of a wireless communication system or a camera device. The electronic device 50 may be also comprised at a local or a remote server or a graphics processing unit of a computer. The device may be also comprised as part of a head-mounted display device. The apparatus 50 may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example, the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery (or in other embodiments of the invention the device may be powered by any suitable mobile energy device such as solar cell, fuel cell or clockwork generator). The apparatus may further comprise a camera 42 capable of recording or capturing images and/or video. The camera 42 may be a multi-lens camera system having at least two camera sensors. The camera is capable of recording or detecting individual frames which are then passed to the codec 54 or the controller for processing. The apparatus may receive the video and/or image data for processing from another device prior to transmission and/or storage.

The apparatus 50 may comprise a controller 56 or processor for controlling the apparatus 50. The apparatus or the controller 56 may comprise one or more processors or processor circuitry and be connected to memory 58 which may store data in the form of image, video and/or audio data, and/or may also store instructions for implementation on the controller 56 or to be executed by the processors or the processor circuitry. The controller 56 may further be connected to codec circuitry 54 suitable for carrying out coding and decoding of image, video and/or audio data or assisting in coding and decoding carried out by the controller.

The apparatus 50 may further comprise a card reader 48 and a smart card 46, for example a UICC (Universal Integrated Circuit Card) and UICC reader for providing user information and being suitable for providing authentication information for authentication and authorization of the user at a network. The apparatus 50 may comprise radio interface circuitry 52 connected to the controller and suitable for generating wireless communication signals for example for communication with a cellular communications network, a wireless communications system, or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es). The apparatus may comprise one or more wired interfaces configured to transmit and/or receive data over a wired connection, for example an electrical cable or an optical fiber connection.

The various embodiments can be implemented with the help of computer program code that resides in a memory and causes the relevant apparatuses to carry out the method. For example, a device may comprise circuitry and electronics for handling, receiving, and transmitting data, computer program code in a memory, and a processor that, when running the computer program code, causes the device to carry out the features of an embodiment. Yet further, a network device like a server may comprise circuitry and electronics for handling, receiving, and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. An apparatus for encoding, comprising

   means for receiving audio-visual three-dimensional scene comprising geometry information for an audio component and geometry information for a visual component;
   means for determining at least one base geometry component that is common for the audio component and visual component;
   means for encoding the determined at least one base geometry component into a bitstream being either a compressed audio bitstream or a compressed video bitstream; and
   means for encoding an indication of an absence of a base geometry component into a bitstream not comprising said at least one base geometry component.

2. The apparatus according to claim 1, wherein the visual component comprises one or more compressed video bitstreams and the audio component comprise one or more compressed audio bitstreams.

3. The apparatus according to claim 1, wherein the audio-visual three-dimensional scene information comprises raw audio-visual three-dimensional scene information provided by audio-visual scene authoring entity.

4. The apparatus according to any of the claims 1 to 3, in addition to said at least one base geometry component, the apparatus comprises means for determining any combination of the following:

zero or more geometry displacement components;
zero or more visual attribute components;
zero or more audio attribute components;
zero or more general audio properties for the scene.

5. The apparatus according to any of the claims 1 to 4, wherein the apparatus comprises determining one or more audio material identifier values and encoding the one or more audio material identifier values as a new attribute video component in the compressed video bitstream, wherein each audio material identifier is mapped to an audio material description in the compressed audio bitstream.

6. The apparatus according to any of the claims 1 to 5, wherein the base geometry component comprises a base mesh being a low fidelity mesh approximation of an original mesh data of audio-visual three-dimensional scene information.

7. The apparatus according to any of the claims 1 to 6, wherein the compressed audio bitstream is coded according to an MPEG-I Immersive Audio (M-IIA) coding and the compressed video bitstream is coded according to a Video-based Dynamic Mesh Coding (V-DMC).

8. An apparatus for decoding, comprising

means for receiving one or more bitstreams comprising compressed audio bitstreams and compressed video bitstreams;
means for detecting an indicator either from compressed audio bitstreams or from compressed video bitstreams, the indicator indicating an absence of a base geometry component in an audio bitstream or in a video bitstream;
means for decoding a base geometry component from other of the compressed bitstreams not having the indicator; and
means for creating an audio-visual three-dimensional scene according to the base geometry component.

9. The apparatus according to claim 8, wherein the base geometry is decoded from the compressed video bitstream, wherein the apparatus further comprises means for decoding audio material identifier from the compressed video bitstream; means for reconstructing meshes component according to base geometry component and the audio material identifier; and means for reconstructing the audio scene according to the reconstructed meshes and other compressed audio bitstreams.

10. The apparatus according to claim 8, wherein the base geometry component is decoded from the compressed audio bitstream, wherein the apparatus further comprises means for reconstructing the audio scene according to the base geometry component and other compressed audio bitstreams.

11. The apparatus according to any of the claims 8 to 10, wherein the compressed audio bitstream is coded according to an MPEG-I Immersive Audio (M-IIA) coding and the compressed video bitstream is coded according to a Video-based Dynamic Mesh Coding (V-DMC).

12. The apparatus according to any of the claims 8 to 11, wherein for creating the audio-visual three-dimensional scene, the apparatus comprises means for reconstructing a geometry and means for rendering the scene for a user.

13. A method for encoding, comprising:

receiving audio-visual three-dimensional scene comprising geometry information for an audio component and geometry information for a visual component;
determining at least one base geometry component that is common for the audio component and visual component;
encoding the determined at least one base geometry component into a bitstream being either a compressed audio bitstream or a compressed video bitstream; and
encoding an indication of an absence of a base geometry component into a bitstream not comprising said at least one base geometry component.

14. A method for decoding, comprising:

receiving one or more bitstreams comprising compressed audio bitstreams and compressed video bitstreams; detecting an indicator either from compressed audio bitstreams or from compressed video bitstreams, the indicator indicating an absence of a base geometry component in an audio bitstream or in a video bitstream; decoding a base geometry component from other of the compressed bitstreams not having the indicator; and creating an audio-visual three-dimensional scene according to the base geometry component.

15. The method according to claim 14, wherein the base geometry is decoded from the compressed video bitstream, wherein the method further comprises decoding audio material identifier from the compressed video bitstream; reconstructing meshes component according to base geometry component and the audio material identifier; and reconstructing the audio scene according to the reconstructed meshes and other compressed audio bitstreams.

Fig. 1a

Fig. 1b

Fig. 2

Fig. 3a

Fig. 3b

Fig. 3c

Fig. 4

Fig. 5

Fig. 6

Input Mesh M(i) → Mesh Decimation 710 → Decimated Mesh dm(i) → Atlas Parametrization 720 → Parametrized Decimated Mesh pm(i) → Fitting Subdivision surface 730 → Displacements d(i) / Base Mesh m(i)

Fig. 7

EP 4 443 880 A1

801

Patch
information
Base mesh
m(i)

802

Displacements
d(i)

803

804

Static/Dynamic
Mesh M(i)
Attribute
Map A(i)

805

**Intra Frame Encoder**

Quantization → Static Mesh Encoder

Static Mesh Decoder

Reconstructed quantized base mesh m'(i)

Update Displacements

Updated displacements d'(i)

Wavelet Transform

Wavelet coefficients e(i)

Control

Quantization

Quantized wavelet coefficients e'(i)

Image Packing

Packed Quantized wavelet coefficients

Video Encoding

Reconstructed packed quantized wavelet coefficients

Inverse Wavelet Transform ← Inverse Quantization ← Image Unpacking

Reconstructed displacements d''(i)

Reconstructed base mesh m''(i)

Reconstruct Deformed Mesh ← Inverse Quantization

Reconstructed deformed mesh DM(i)

Attribute Transfer → Updated Attribute Map A'(i) → Padding → Updated Attribute Map A'(i) → Color Space Conversion → Video Encoding

Compressed base mesh bitstream

Compressed displacements bitstream

Compressed attribute Map bitstream

MUX

895

Compressed bitstream b(i)

Fig. 8

26

Fig. 9

EP 4 443 880 A1

Fig. 10

Fig. 11

Fig. 12

EP 4 443 880 A1

Fig. 13

Fig. 14

| Syntax | No. of bits | Mnemonic |
|---|---|---|

```
mpegiScenePayload()
{
        payloadId;                                  16      uimsbf
        payloadCount;                               16      uimsbf

        for (int i = 0; i < payloadCount; i++) {
                payloadType;                        11      uimsbf
                payloadLabel;                       2       uimsbf
                payloadLength;                      59      uimsbf

                switch (payloadType) {
                        case PLD_DIRECTIVITY: {

        payloadDirectivity();
                                        break;
                        }
                        case PLD_DIFFRACTION:
{

        payloadDiffraction();
                                        break;
                        }
                        case
PLD_EARLY_REFLECTIONS: {

        payloadEarlyReflections();
                                        break;
                        }
                        case PLD_PORTAL: {

        payloadPortal();
                                        break;
                        }
                        case PLD_REVERB: {

        payloadReverb();
                                        break;
                        }
                        case PLD_AUDIO_PLUS: {

        payloadAudioPlus();
                                        break;
                        }
                        case PLD_DISPERSION: {

        payloadDispersion();
                                        break;
                        }
                        case PLD_VOX_DATA: {

        payloadVoxData();
                                        break;
                        }
                        case PLD_SCENE: {

        payloadScene();
                                        break;
                        }
                }
        }
}
```

Fig. 15

Table for payloadScene()

| Syntax | No. of bits | Mnemonic |
|---|---|---|
| payloadScene() | | |
| { | | |
|     **sceneDuration;** | **8** | **uimsbf** |
|     **sceneType;** | **1** | **bslbf** |
|     transforms(); | | |
|     anchors(); | | |
|     audioStreams(); | | |
|     materials(); | | |
|     directivities(); | | |
|     primitives(); | | |
|     meshes(); | | |
|     environments(); | | |
|     objectSources(); | | |
|     hoaGroups(); | | |
|     hoaSources(); | | |
|     channelSources(); | | |
| } | | |

## Fig. 16

| Syntax | No. of bits | Mnemonic |
|---|---|---|
| materials() | | |
| { | | |
|     materialsCount = GetCountorIndex(); | | |
|     for (int i = 0; i < materialsCount; i++) { | | |
|         materialId = Get Id(); | | |
|         **materialCodedLength;** | **32** | **uimsbf** |
|         **materialCoeffs();** | **materialCodedLength** | **bslbf** |
|     } | | |
| } | | |

## Fig. 17

Fig. 18

**Table for meshes()**

| Syntax | No. of bits | Mnemonic |
|---|---|---|
| meshes() | | |
| { | | |
|     meshesCount = GetCountOrIndex(); | | |
|     for (int i = 0; i < meshesCount; i++) { | | |
|         meshId = GetID(); | | |
|         **meshCodedLength**; | 32 | uimsbf |
|         **meshFaces()**; | meshCodedLength | bslbf |
|         [meshPositionX; | | |
|         meshPositionY; | | |
|         meshPositionZ;] = | | |
| GetPosition(isSmallScene) | | |
|         [meshOrientationYaw; | | |
|         meshOrientationPitch; | | |
|         meshOrientationRoll;] = | | |
| GetOrientation() | | |
|         **meshCoordSpace**; | 1 | bslbf |
|         **meshHasSpatialTransform**; | 1 | bslbf |
|         if (meshHasSpatialTransform) { | | |
|           **meshHasAnchor**; | 1 | bslbf |
|           if | | |
| (meshHasAnchor) { | | |
|         meshParentAnchorId = GetID(); | | |
|         } | | |
|         else { | | |
|         meshParentTransformId = GetID(); | | |
|         } | | |
|         } | | |
|         **isMeshStatic**; | 1 | bslbf |
|     } | | |
| } | | |

Fig. 19

| Syntax | No. of bits | Mnemonic |
|---|---|---|
| meshFaces() | | |
| { | | |
|     vertexCount = frdReadUniform(18); | | vlclbf |
|     faceCount = frdReadUniform(18); | | vlclbf |
|     frdReadUniform(10); // skip[1] | | |
|     vertexQuantStep = frdReadCompactUint(10) / | | vlclbf |
| 10000.0; | | |
|     **bbBits**; | 5 | uismbf |
|     bbBits += 1; | | |
|     boudingBox(); | | |
|     preprocessGCD(); | | |
|     vertexList(); | | |
|     faceList(); | | |
|     **reserved**; | 32 | uimsbf |
| } | | |

| Syntax | No. of bits | Mnemonic |
|---|---|---|
| payloadEarlyReflections() | | |
| { | | |
|    **earlyTriangleCullingDistanceOrder1;** | **8** | **uimsbf** |
|    **earlyTriangleCullingDistanceOrder2;** | **8** | **uimsbf** |
|    **earlyTriangleSourceDistanceOrder1;** | **8** | **uimsbf** |
|    **earlyTriangleSourceDistanceOrder2;** | **8** | **uimsbf** |
| | | |
|    [earlyVoxelGridOriginX; | | |
|    earlyVoxelGridOriginY; | | |
|    earlyVoxelGridOriginZ;] = GetPosition(isSmallScene) | | |
| | | |
|    earlyVoxelGridPitchX = GetDistance(isSmallScne); | | |
|    earlyVoxelGridPitchY = GetDistance(isSmallScne); | | |
|    earlyVoxelGridPitchZ = GetDistance(isSmallScne); | | |
| | | |
|    **earlyVoxelGridShapeX;** | **32** | **uimsbf** |
|    **earlyVoxelGridShapeY;** | **32** | **uimsbf** |
|    **earlyVoxelGridShapeZ;** | **32** | **uimsbf** |
| | | |
|    **earlySurfaceDataJSON;** | **8..*** | **cstring** |
|    **earlySurfaceConnectedDataJSON;** | **8..*** | **cstring** |
|    **earlyVoxelDataJSON;** | **8..*** | **cstring** |
| | | |
|    **hasEarlyTuningGain;** | **1** | **bslbf** |
|    if (hasEarlyTuningGain ) { | | |
|                   **earlyTuningGain;** | **6** | **uimsbf** |
|    } | | |
| } | | |

Fig. 20

Fig. 21

Fig. 22

Fig. 23

EP 4 443 880 A1

Fig. 24

Fig. 25

2560

2570

V-DMC bitstream

Missing base-mesh indicator

M-IIA bitstream

Mux & encode

Mux & encode

Non-Base mesh V-DMC bitstreams

Base mesh bitstream

AMID information

Scene bitstream \w meshes()

Other M-IIA bitstreams

Audio visual 3D scene authoring

M-IIA bitstream

and/or

V-DMC bitstream

and/or

Audio-visual scene authoring

Fig. 26

**— Syntax of meshes()**

| Syntax | No. of bits | Mnemonic |
|---|---|---|
| meshes() | | |
| { | | |
|     **meshesNotPresent;** | 1 | uismbf |
|     if (meshesNotPresent==1) { | | |
|         meshReferenceStruct() | 32 | uimsbf |
|         **isMeshStatic** | 1 | uimsbf |
|     } | | |
|     else{ | | |
|     meshesCount = GetCountOrIndex(); | | |
|     for (int i = 0; i < meshesCount; i++) { | | |
|         meshId = GetID(); | | |
|         **meshCodedLength;** | 32 | uimsbf |
|         meshFaces(); | **meshCodedLength** | bslbf |
| | | |
|         [meshPositionX; | | |
|         meshPositionY; | | |
|         meshPositionZ;] = | | |
| GetPosition(isSmallScene) | | |
| | | |
|         [meshOrientationYaw; | | |
|         meshOrientationPitch; | | |
|         meshOrientationRoll;] = | | |
| GetOrientation() | | |
| | | |
|         **meshCoordSpace;** | 1 | bslbf |
| | | |
|         **meshHasSpatialTransform;** | 1 | bslbf |
|         if (meshHasSpatialTransform) { | | |
|             **meshHasAnchor;** | 1 | bslbf |
|             if | | |
| (meshHasAnchor) { | | |
| | | |
|     meshParentAnchorId = GetID(); | | |
|             } | | |
|             else { | | |
| | | |
|     meshParentTransformId = GetID(); | | |
|             } | | |
|         } | | |
|         **isMeshStatic;** | 1 | bslbf |
|     } | | |
|     } | | |
| } | | |

# Fig. 27

EP 4 443 880 A1

```
┌─────────────────────────────────────────────────┐
│         receive audio-visual three-dimensional scene         │  ⌐2805
│   comprising geometry information for an audio component    │
│      and geometry information for a visual component       │
└─────────────────────────────────────────────────┘
                          │
                          ▼
┌─────────────────────────────────────────────────┐
│    determine at least one base geometry component that is    │  2810
│      common for the audio component and visual component     │
└─────────────────────────────────────────────────┘
                          │
                          ▼
┌─────────────────────────────────────────────────┐
│        encode the determined at least one base geometry       │  2815
│  component into a bitstream being either a compressed audio   │
│        bitstream or a compressed video bitstream             │
└─────────────────────────────────────────────────┘
                          │
                          ▼
┌─────────────────────────────────────────────────┐
│       encode an indication of an absence of a base geometry    │  2820
│  component into a bitstream not comprising said at least one   │
│               base geometry component                        │
└─────────────────────────────────────────────────┘
```

Fig. 28

```
┌─────────────────────────────────────────────────────────────────────────┐
│ receive one or more bitstreams comprising compressed audio bitstreams and │
│                     compressed video bitstreams                           │
└─────────────────────────────────────────────────────────────────────────┘
2910
                                      ↓
┌─────────────────────────────────────────────────────────────────────────┐
│ detect an indicator either from compressed audio bitstreams or from       │
│ compressed video bitstreams, the indicator indicating an  absence of a    │
│ base geometry component in an audio bitstream or in a video bitstream      │
└─────────────────────────────────────────────────────────────────────────┘
2920
                                      ↓
┌─────────────────────────────────────────────────────────────────────────┐
│ decode a base geometry component from other of the compressed bitstreams  │
│                        not having the indicator                           │
└─────────────────────────────────────────────────────────────────────────┘
2925
                                      ↓
┌─────────────────────────────────────────────────────────────────────────┐
│ create an audio-visual three-dimensional scene according to the base      │
│                         geometry component                                │
└─────────────────────────────────────────────────────────────────────────┘
2930
```

Fig. 29

Fig. 30

Europäisches Patentamt
European Patent Office
Office européen des brevets

**EUROPEAN SEARCH REPORT**

Application Number

EP 24 16 1149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | "Considerations on MPEG-I audio and MPEG-I scene description architectures", 141. MPEG MEETING; 20230116 - 20230120; ONLINE; (MOTION PICTURE EXPERT GROUP OR ISO/IEC JTC1/SC29/WG11), , no. n22272 17 February 2023 (2023-02-17), XP030308376, Retrieved from the Internet: URL:https://dms.mpeg.expert/doc_end_user/d ocuments/141_OnLine/wg11/MDS22272_WG06_N00 186.zip N0186_Considerations on MPEG-I audio and MPEG-I scene description architectures v6.docx [retrieved on 2023-02-17] * sections 1, 3.1;; figure 4 * | 1-15 | INV. H04N19/25 G06T9/00 G06T17/00 H04N19/597 H04N21/234 H04N21/2368 |
| A | JUNGSUN KIM (APPLE) ET AL: "[VDMC] Updates to clean the working draft of V-DMC", 141. MPEG MEETING; 20230116 - 20230120; ONLINE; (MOTION PICTURE EXPERT GROUP OR ISO/IEC JTC1/SC29/WG11), , no. m62254 17 January 2023 (2023-01-17), XP030308075, Retrieved from the Internet: URL:https://dms.mpeg.expert/doc_end_user/d ocuments/141_OnLine/wg11/m62254-v4-m62254. zip m62254/vdmc_WD_v0.4_v3_m62254.docx [retrieved on 2023-01-17] * sections 3.1, 3.3, 8.4.4.7, 9.1, 9.3, Annex H * | 1-15 | |

TECHNICAL FIELDS SEARCHED (IPC)

H04N
G06T

-/--

The present search report has been drawn up for all claims

| Place of search | Date of completion of the search | Examiner |
|---|---|---|
| Munich | 25 July 2024 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

## EUROPEAN SEARCH REPORT

**Application Number**

EP 24 16 1149

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "WD2 of ISO/IEC 23090-4, MPEG-I immersive audio", 141. MPEG MEETING; 20230116 - 20230120; ONLINE; (MOTION PICTURE EXPERT GROUP OR ISO/IEC JTC1/SC29/WG11), , no. n22222 17 February 2023 (2023-02-17), XP030308368, Retrieved from the Internet: URL:https://dms.mpeg.expert/doc_end_user/documents/141_OnLine/wg11/MDS22222_WG06_N00181.zip N0181/ISO_MPEG-I_WD2_2023-02-17_v11.docx [retrieved on 2023-02-17] * sections 3.2, 4.1, 5.2.1, 6.2.9, 6.2.11, 6.3.2 * | 1-15 | |
| A | "Text of ISO/IEC CD 23090-14 Scene Description for MPEG Media", 132. MPEG MEETING; 20201012 - 20201016; ONLINE; (MOTION PICTURE EXPERT GROUP OR ISO/IEC JTC1/SC29/WG11), , no. n19706 7 December 2020 (2020-12-07), XP030291518, Retrieved from the Internet: URL:https://dms.mpeg.expert/doc_end_user/documents/132_OnLine/wg11/MDS19706_WG03_N00026.zip MDS19706_ISOIEC_CD_23090-14_Scene_Description_final_clean.docx [retrieved on 2020-12-07] * sections 5.2 to 5.4 * | 1-15 | TECHNICAL FIELDS SEARCHED (IPC) |

The present search report has been drawn up for all claims

| Place of search | Date of completion of the search | Examiner |
|---|---|---|
| Munich | 25 July 2024 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)